(19) Europäisches Patentamt
European Patent Office
Office européen des brevets

(11) EP 4 708 381 A2

(12) EUROPEAN PATENT APPLICATION

(43) Date of publication:
**11.03.2026 Bulletin 2026/11**

(21) Application number: **25200066.6**

(22) Date of filing: **04.09.2025**

(51) International Patent Classification (IPC):
***H01M 4/133*** *(2010.01)* ***H01M 4/134*** *(2010.01)*
***H01M 4/137*** *(2010.01)* ***H01M 4/36*** *(2006.01)*
***H01M 4/583*** *(2010.01)* ***H01M 4/60*** *(2006.01)*
***H01M 4/62*** *(2006.01)*

(52) Cooperative Patent Classification (CPC):
**H01M 4/133; H01M 4/134; H01M 4/137; H01M 4/364; H01M 4/583; H01M 4/602; H01M 4/625;** H01M 2004/027

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **05.09.2024 KR 20240120639**

(71) Applicant: **Samsung SDI Co., Ltd.**
**Yongin-si, Gyeonggi-do 17084 (KR)**

(72) Inventor: **JUNG, Mijung**
**Gyeonggi-do 17084 (KR)**

(74) Representative: **Michalski Hüttermann & Partner Patentanwälte mbB**
**Kaistraße 16A**
**40221 Düsseldorf (DE)**

# (54) NEGATIVE ELECTRODE FOR ALL-SOLID-STATE BATTERY, ALL-SOLID-STATE BATTERY, AND METHOD OF FABRICATING THE SAME

(57) Disclosed are negative electrodes, all-solid-state batteries, and fabrication methods thereof. The all-solid-state battery includes a positive electrode layer, a negative electrode layer including a negative electrode current collector, and a negative electrode coating layer on the negative electrode current collector, and a solid electrolyte layer between the positive electrode layer and the negative electrode layer. The negative electrode layer includes lithiophilic metal, carbon, an additive, and a porous polymer composite. The porous polymer composite has a particulate shape. The additive includes a binder. An amount of the porous polymer composite in the negative electrode coating layer is greater than the amount of the additive in the negative electrode coating layer.

FIG. 1

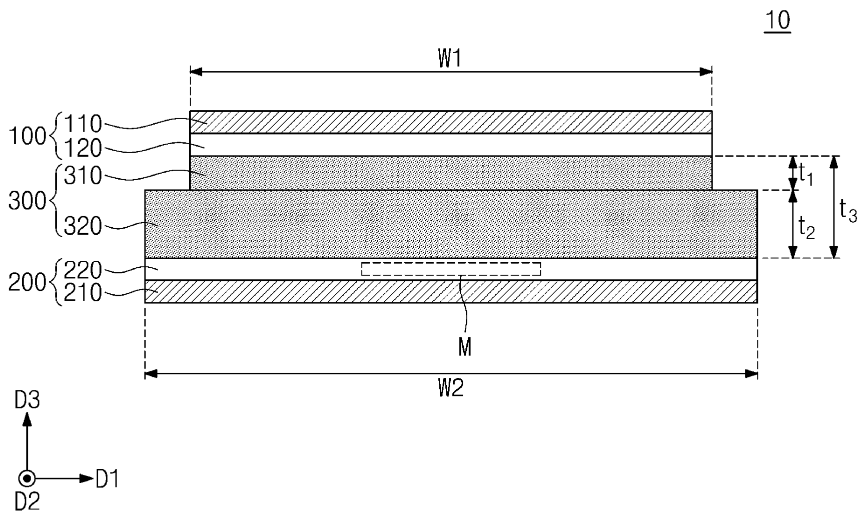


EP 4 708 381 A2

## Description

CROSS-REFERENCE TO RELATED APPLICATION

This application claims priority under 35 U.S.C § 119 to Korean Patent Application No. 10-2024-0120639 filed on September 5, 2024 in the Korean Intellectual Property Office, the disclosure of which is hereby incorporated by reference in its entirety.

BACKGROUND

The present disclosure relates to a negative electrode for an all-solid-state battery, an all-solid-state battery, and a method of fabricating an all-solid-state battery.

There is increased demand for high-energy density and safe batteries. For example, lithium ion batteries are being commercialized not only in formation-related and communication devices, but also in the automotive industry. In the automotive industry, safety is emphasized due to its direct relation to human safety.

There have been suggested all-solid-state batteries in which an electrolyte solution of lithium ion batteries is replaced with a solid electrolyte. As all-solid-state batteries do not use flammable organic dispersion mediums, the possibility of fire or explosion may be significantly reduced even in the event of short-circuit. Therefore, all-solid-state batteries may have desired or improved stability.

SUMMARY

An example embodiment of the present disclosure includes an all-solid-state battery with desired or improved battery lifespan and stability.

An example embodiment of the present disclosure includes a method of fabricating an all-solid-state battery with desired or improved battery lifespan and stability.

According to an example embodiment of the present disclosure, an all-solid-state battery may include a positive electrode layer; a negative electrode layer, wherein the negative electrode layer includes a negative electrode current collector and a negative electrode coating layer on the negative electrode current collector; and a solid electrolyte layer between the positive electrode layer and the negative electrode layer. The negative electrode layer may include lithiophilic metal, carbon, an additive, and a porous polymer composite. The porous polymer composite may have a particulate shape. The additive may include a binder. An amount of the porous polymer composite in the negative electrode coating layer may be greater than an amount of the additive in the negative electrode coating layer.

According to an example embodiment of the present disclosure, a negative electrode for an all-solid-state battery may include a negative electrode current collector; and a negative electrode coating layer on the negative electrode current collector. The negative electrode coating layer may include a metal-carbon composite, a binder, and a porous polymer composite. The porous polymer composite may have a particulate shape. An average particle diameter of the porous polymer composite may be less than an average particle diameter of the metal-carbon composite.

According to an example embodiment of the present disclosure, a method of fabricating an all-solid-state battery may include forming a negative electrode layer, a solid electrolyte layer, and a positive electrode layer; stacking, e.g., sequentially stacking the negative electrode layer, the solid electrolyte layer, and the positive electrode layer to insert into a laminate film; and performing a warm isostatic press on the laminate film. The step of forming the negative electrode layer may include forming a polymer gel; mixing a first solvent, a metal-carbon composite, a binder, and the polymer gel with each other to form a negative electrode slurry; and coating on a negative electrode current collector the negative electrode slurry to form a negative electrode coating layer. The negative electrode coating layer may include a porous polymer composite derived from the polymer gel. An amount of the porous polymer composite in the negative electrode coating layer may be greater than an amount of the binder in the negative electrode coating layer.

BRIEF DESCRIPTION OF DRAWINGS

FIG. 1 illustrates a cross-sectional view showing an all-solid-state battery according to an example embodiment of the present disclosure.

FIG. 2 illustrates a plan view showing an all-solid-state battery according to an example embodiment of the present disclosure.

FIG. 3 illustrates a cross-sectional view showing an all-solid-state battery according to an example embodiment of the present disclosure.

FIG. 4 illustrates a cross-sectional view showing an all-solid-state battery according to an example embodiment of the present disclosure.

FIG. 5 illustrates a cross-sectional view showing an all-solid-state battery according to an example embodiment of the present disclosure.

FIG. 6 illustrates a cross-sectional view showing an all-solid-state battery according to an example embodiment of the present disclosure.

FIG. 7 illustrates an enlarged view showing section M of FIG. 1.

FIGS. 8A and 8B illustrate conceptual diagrams showing cross-linked polymer structures.

FIGS. 9A to 9D and 10 illustrate conceptual diagrams showing a method of fabricating an all-solid-state battery according to an example embodiment of the present disclosure.

FIG. 11 illustrates a conceptual diagram showing a method of fabricating an all-solid-state battery according to an example embodiment of the present disclosure.

FIG. 12 is a flow chart illustrating a method of fabricating an all-solid-state battery, according to an example embodiment.

DETAILED DESCRIPTION OF EMBODIMENTS

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be "directly on" the other element, or intervening elements may be present therebetween. In the drawings, thicknesses of some components may be exaggerated for effectively explaining the technical contents. Like reference numerals refer to like elements throughout the specification.

Some example embodiments detailed in this description are discussed with reference to sectional and/or plan views as ideal example views of the present disclosure. In the drawings, thicknesses of layers and regions are exaggerated for effectively explaining the technical contents. Accordingly, regions illustrated in the drawings have general properties, and shapes of regions illustrated in the drawings are used to disclose specific shapes but not limited to the scope of the present disclosure. It is understood that, although the terms "first," "second," "third," and the like, may be used herein to describe various elements, these elements should not be limited by these terms. These terms are only used to distinguish one element from another element. The example embodiments explained and illustrated herein include complementary embodiments thereof.

Unless otherwise specially noted in this description, the expression of singular form may include the expression of plural form. In addition, unless otherwise specially noted, the phrase "A or B" may indicate "A but not B," "B but not A," and "A and B." The terms "comprises/includes" and/or "comprising/including" used in this description do not exclude the presence or addition of one or more other components.

In this description, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter ($D_{50}$) where a cumulative volume is about 50 volume % in a particle size distribution. The average particle diameter ($D_{50}$) may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and then from this, an average particle diameter ($D_{50}$) value may be obtained through a calculation. Dissimilarly, a laser scattering method may be utilized to measure the average particle diameter ($D_{50}$). In the laser scattering method, a target particle is distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device.

When the terms "about" or "substantially" are used in this specification in connection with a numerical value, it is intended that the associated numerical value include a tolerance of $\pm$10% around the stated numerical value. When ranges are specified, the range includes all values therebetween such as increments of 0.1%.

FIG. 1 illustrates a cross-sectional view showing an all-solid-state battery according to an example embodiment of the present disclosure. FIG. 2 illustrates a plan view showing an all-solid-state battery according to an example embodiment of the present disclosure.

Referring to FIG. 1, an all-solid-state battery 10 according to an example embodiment may include a positive electrode layer 100, a negative electrode layer 200 opposite to the positive electrode layer 100, and a solid electrolyte layer 300 between the positive electrode layer 100 and the negative electrode layer 200. The present disclosure, however, is not limited thereto, and the all-solid-state battery 10 may further include an additional functional layer, such as, e.g., an adhesion enhancement layer, between the positive electrode layer 100 and the solid electrolyte layer 300, or between the negative electrode layer 200 and the solid electrolyte layer 300.

The positive electrode layer 100 according to an example embodiment may include a positive electrode current collector 110 and a positive electrode active material layer 120 disposed on the positive electrode current collector 110. Although not shown, the positive electrode active material layer 120 may include a positive electrode active material, a solid electrolyte, a conductive material, and a binder.

The positive electrode current collector 110 may provide a reference surface on which the positive electrode active material layer 120 is formed. The positive electrode current collector 110 may include a plate or a foil including, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

Differently from that shown in FIG. 1, in an example embodiment of the present disclosure, the positive electrode current collector 110 may be omitted. Although not shown, in order to increase an adhesive force between the positive electrode current collector **110 and** the positive electrode active material layer 120, a carbon layer of $\geq 0.1$ $\mu$m to $\leq 4$ $\mu$m in thickness may further be disposed between the positive electrode current collector 110 and the positive electrode active material layer 120.

The positive electrode active material may include a material that can reversibly absorb and desorb lithium ions. The positive electrode active material may include a plurality of particles. The positive electrode active material may include, for example, at least one of a lithium transition metal oxide (e.g., lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate), a nickel sulfide, a copper sulfide, a lithium sulfide, an iron oxide, or a vanadium oxide, but the present disclosure is not limited thereto. The positive electrode active material may be included alone, or in a mixture of two or more substances.

The lithium transition metal oxide may be or include, for example, a compound represented by one of $Li_aA_{1-b}B_bD_2$ (where $0.90 \leq a \leq 1$ and $0 \leq b \leq 0.5$), $Li_aE_{1-b}B_bO_{2-c}D_c$ (where $0.90 \leq a \leq 1$, $0 \leq b \leq 0.5$, and $0 \leq c \leq 0.05$), $LiE_{2-b}B_bO_{4-c}D_c$ (where $0 \leq b \leq 0.5$ and $0 \leq c \leq 0.05$), $Li_aNi_{1-b-c}Co_bB_cD_\alpha$ (where $0.90 \leq a \leq 1$, $0 \leq b \leq 0.5$, $0 \leq c \leq 0.05$, and $0<\alpha<2$), $Li_aNi_{1-b-c}Co_bB_cO_{2-\alpha}F_\alpha$ (where $0.90 \leq a \leq 1$, $0 \leq b \leq 0.5$, $0 \leq c \leq 0.05$, and $0<\alpha<2$), $Li_aNi_{1-b-c}Mn_bB_cD_\alpha$ (where $0.90 \leq a \leq 1$, $0 \leq b \leq 0.5$, $0 \leq c \leq 0.05$, and $0< \alpha \leq 2$), $Li_aNi_{1-b-c}Mn_bB_cO_{2-\alpha}F_\alpha$ (where $0.90 \leq a \leq 1$, $0 \leq b \leq 0.5$, $0 \leq c \leq 0.05$, and $0<\alpha<2$), $Li_aNi_bE_cG_dO_2$ (where $0.90 \leq a \leq 1$, $0 \leq b \leq 0.9$, $0 \leq c \leq 0.5$, and $0.001 \leq d \leq 0.1$), $Li_aNi_bCo_cMn_dG_eO_2$ (where $0.90 \leq a \leq 1$, $0 \leq b \leq 0.9$, $0 \leq c \leq 0.5$, $0 \leq d \leq 0.5$, and $0.001 \leq e \leq 0.1$), $Li_aNiG_bO_2$ (where $0.9 \leq a \leq 1$ and $0.001 \leq b \leq 0.1$), $Li_aCoG_bO_2$ (where $0.90 \leq a \leq 1$ and $0.001 \leq b \leq 0.1$), $Li_aMnG_bO_2$ (where $0.90 \leq a \leq 1$ and $0.001 \leq b \leq 0.1$), $Li_aMn_2G_bO_4$ (where $0.90 \leq a \leq 1$ and $0.001 \leq b \leq 0.1$), $QO_2$, $QS_2$, $LiQS_2$, $V_2O_5$, $LiV_2O_5$, $LiIO_2$, $LiNiVO_4$, $Li_{3-f}J_2(PO_4)_3$ (where $0 \leq f \leq 2$), $Li_{3-f}Fe_2(PO_4)_3$ (where $0 \leq f \leq 2$), $LiFePO_4$. In the compounds above, "A" may be or include at least one of Ni, Co, Mn, or a combination thereof, "B" may be or include at least one of Al, Ni, Co, Mn, Cr, Fe, Mg, Sr, V, a rare-earth element, or a combination thereof, "D" may be or include at least one of O, F, S, P, or a combination thereof, "E" may be or include at least one of Co, Mn, or a combination thereof, "F" may be or include at least one of F, S, P, or a combination thereof, "G" may be or include at least one of Al, Cr, Mn, Fe, Mg, La, Ce, Sr, V, or a combination thereof, "Q" may be or include at least one of Ti, Mo, Mn, or a combination thereof, "I" may be or include at least one of Cr, V, Fe, Sc, Y, or a combination thereof, and "J" may be or include at least one of V, Cr, Mn, Co, Ni, Cu, or a combination thereof.

The positive electrode active material may include, for example, a lithium salt of transition metal oxide having a layered rock salt type structure among lithium transition metal oxides discussed above. The term "layered rock salt type structure" may refer to a structure in which an oxygen atom layer and a metal atom layer are alternately and regularly arranged in a <111> direction of a cubic rock salt type structure, where each atom layer forms a two-dimensional plane. The term "cubic rock salt type structure" may refer to a sodium chloride (NaCl) type structure, which is a type of crystal structure, and for example, has a structure in which face centered cubic lattices (FCCs) each formed of cations and anions, are arranged displaced from each other by 1/2 of a ridge of a unit lattice. The lithium transition metal oxide having the layered rock salt type structure may be a ternary lithium transition metal oxide, such as $LiNi_xCo_yAl_zO_2$ (NCA) or $LiNi_xCo_yMn_zO_2$ (NCM) (where $0<x<1, 0<y<1$, $0<z<1$, and $x+y+z=1$). When the positive electrode active material includes a ternary lithium transition metal oxide having the layered rock salt type structure, the all-solid-state battery 10 may improve in energy density and thermal stability.

The compound included in the positive electrode active material may be covered with a coating layer (not shown). The positive electrode active material may be included in a mixture of the compound and a compound to which the coating layer is added. The coating layer added to a surface of the positive electrode active material may include, for example, at least one of oxide, hydroxide, oxyhydroxide, oxycarbonate, or hydrocarbonate of a coating element discussed below. The compound forming the coating layer may be amorphous or crystalline. The coating element included in the coating layer may include at least one of Mg, Al, Co, K, Na, Ca, Si, Ti, V, Sn, Ge, Ga, B, As, Zr, or a mixture thereof. The coating layer may

include, for example, $Li_2O$-$ZrO_2$ (LZO). A method for forming the coating layer may be or include any methods that do not adversely affect physical characteristics of the positive electrode active material. For example, spray coating or immersion may be utilized to form the coating layer.

When the positive electrode active material includes nickel (Ni) as a ternary lithium transition metal oxide such as NCA or NCM, a capacity density of the all-solid-state battery 10 may increase to reduce metal elution of the positive electrode active material in a charged state. Thus, the all-solid-state battery 10 may improve in cycle characteristics in a charged state. The language "cycle characteristics" may refer to properties that indicate the degree to which the all-solid-state battery 10 is degraded due to repeated charge and discharge cycles. For example, an all-solid-state battery 10 with high cycle characteristics may degrade less due to repeated charge and discharge cycles, while an all-solid-state battery 10 with low cycle characteristics may degrade more due to repeated charge and discharge cycles.

The positive electrode active material may have a substantially spherical or substantially oval particulate shape. There may be no limitation on a particle diameter and an amount of the positive electrode active material. In an example embodiment, the positive electrode active material may have a polycrystalline form, and may include a secondary particle in which at least two primary particles are aggregated. For example, one positive electrode active material particle may include a plurality of primary particles that are aggregated with each other. The positive electrode active material particle may have a substantially spherical or oval shape.

The solid electrolyte may be dispersed between the positive electrode active materials. The solid electrolyte dispersed between the positive electrode active materials may have a particulate shape. The solid electrolyte dispersed between the positive electrode active materials may include a sulfide-based solid electrolyte with desired or improved lithium ion conductivity characteristics. The sulfide-based solid electrolyte may include, for example, at least one of $Li_2S$-$P_2S_5$, $Li_2S$-$P_2S_5$-LiX (where X is a halogen element), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (where m and n are each a positive integer, and "Z" is one of Ge, Zn, and Ga), $Li_2S$-$GeS_2$, $Li_2S$-$SiS_2$-$Li_3PO_4$, $Li_2S$-$SiS_2$-$Li_pMO_q$ (where p and q are each a positive integer, and "M" is one of P, Si, Ge, B, Al, Ga, and In), $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$).

The sulfide-based solid electrolyte may be or include an argyrodite-type compound including, for example, at least one of $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). For example, the sulfide-based solid electrolyte may be or include an argyrodite-type compound including at least one of $Li_6PS_5Cl$, $Li_6PS_5Br$, and $Li_6PS_5I$. The argyrodite-type solid electrolyte may have a density in a range of ≥ 1.5 g/cc to ≤ 2.0 g/cc. As the argyrodite-type solid electrolyte has a density that is equal to or greater than about 1.5 g/cc, it may be possible to decrease an internal resistance of an all-solid-state battery and to reduce or prevent a solid electrolyte layer from short-circuit and penetration caused by the formation of lithium dendrite. The solid electrolyte may have an elastic modulus in a range of, for example, ≥ 15 GPa to ≤ 35 GPa.

The solid electrolyte included in the positive electrode active material layer 120 may have a medium-sized average particle diameter ($D_{50}$) that is less than the average particle diameter of a solid electrolyte included in the solid electrolyte layer 300 which is discussed below. For example, the medium-sized average particle diameter ($D_{50}$) of the solid electrolyte in the positive electrode active material layer 120 may be equal to or less than about 90%, 80%, 70%, 60%, 50%, 40%, 30%, or 20% of the medium-sized average particle diameter ($D_{50}$) of a solid electrolyte included in the solid electrolyte layer 300. The medium-sized average particle diameter ($D_{50}$) may be a median diameter measured by a laser particle size distribution analyzer.

The positive electrode active material layer 120 may include a conductive material. The conductive material may have conductivity without causing a chemical change in the all-solid-state battery 10 to increase conductivity of the positive electrode active material and the solid electrolyte. The conductive material may include a carbon-based material. The conductive material may include, for example, one or more of graphite, carbon black, acetylene black, carbon nano-fiber, and carbon nano-tube.

The positive electrode active material layer 120 may further include a binder. The binder may combine the positive electrode active material, the solid electrolyte, and the conductive material to each other in the positive electrode active material layer 120. The binder may include a material configured to improve an adhesive force between the positive electrode active material layer 120 and the positive electrode current collector 110. The binder may include, for example, one or more of polyvinylidenefluoride, styrene-butadiene rubber (SBR), polytetrafluoroethylene, vinylidenefluoride/hexafluoropropylene copolymers, polyacrylonitrile, and polymethyl methacrylate.

Based on the total 100 parts by weight of the positive electrode active material, the solid electrolyte, the conductive material, and the binder, the positive electrode active material may be included in an amount in a range of ≥ 85 parts by weight to ≤ 92 parts by weight in the positive electrode active material layer 120. Based on the total 100 parts by weight of the positive electrode active material, the solid electrolyte, the conductive material, and the binder, the binder may be included in an amount in a range of ≥ 0.5 parts by weight to ≤ 1.5 parts by weight in the positive electrode active material layer 120.

Based on 100 parts by weight of the solid electrolyte in the positive electrode active material layer 120, the conductive material may be included in an amount in a range of ≥ 1 part by weight to ≤ 50 parts by weight in the positive electrode active material layer 120. When the positive electrode active material layer 120 includes the conductive material in amount that is less than about 1 part by weight based on 100 parts by weight of the solid electrolyte in the positive electrode active material layer 120, a proportion of the conductive material may decrease to reduce electrical conductivity of the positive electrode active material layer 120. When the positive electrode active material layer 120 includes the conductive material in an amount that is greater than about 50 parts by weight based on 100 parts by weight of the solid electrolyte in the positive electrode active material layer 120, a proportion of the conductive material may excessively increase to cause incomplete formation of a coating layer that covers a surface of the solid electrolyte.

The positive electrode active material layer 120 may further include an additive, such as a filler, a coating agent, a dispersant, and an ion conductivity agent, in addition to the positive electrode active material, the solid electrolyte, the conductive material, and the binder.

Referring back to FIG. 1, the negative electrode layer 200 may include a negative electrode current collector 210, and a negative electrode coating layer 220 on the negative electrode current collector 210. The negative electrode current collector 210 may provide a reference surface on which the negative electrode coating layer 220 is disposed. The negative electrode current collector 210 may include a material that does not react with lithium, for example, a material that does not form an alloy or a compound with lithium. For example, the negative electrode current collector 210 may include at least one of copper (Cu), stainless steel, titanium (Ti), iron (Fe), cobalt (Co), and nickel (Ni). A thickness of the negative electrode current collector 210 may range from ≥ 1 μm to ≤ 20 μm, for example, from ≥ 5 μm to ≤ 15 μm or from ≥ 7 μm to ≤ 10 μm.

The negative electrode current collector 210 may be formed of or include one of the metals mentioned above, an alloy of two or more of the metals mentioned above, or a coating material. The negative electrode current collector 210 may have, for example, a plate or foil shape. In an example embodiment, the negative electrode current collector 210 may be omitted.

The negative electrode coating layer 220 may induce growth of lithium metal between the negative electrode coating layer 220 and the negative electrode current collector 210 when the all-solid-state battery 10 is charged. In addition, the negative electrode coating layer 220 may induce growth of lithium metal, or form an alloy with lithium in the negative electrode coating layer 220, when the all-solid-state battery 10 is charged. The negative electrode coating layer 220 may be configured as a protection layer for lithium metal, and simultaneously or contemporaneously may reduce or suppress precipitation and growth of lithium dendrites.

The negative electrode coating layer 220 may include metal and carbon. For example, the negative electrode coating layer 220 may include at least one of gold (Au), platinum (Pt), palladium (Pd), silicon (Si), silver (Ag), aluminum (Al), bismuth (Bi), tin (Sn), and zinc (Zn). The negative electrode coating layer 220 may include at least one carbon such as or including at least one of carbon black, acetylene black, furnace black, ketjen black, and graphene. In an example embodiment, the negative electrode coating layer 220 may include a mixture of carbon black and silver (Ag).

The negative electrode coating layer 220 may further include an additive in addition to metal and carbon. The negative electrode coating layer 220 may include at least one of, for example, a binder, a filler, a coating agent, a dispersant, and an ion conductivity agent.

The negative electrode coating layer 220 may have a thickness that is less than the thickness of the positive electrode active material layer 120. For example, the thickness of the negative electrode coating layer 220 may be equal to or less than about 50%, 40%, 30%, 20%, 10%, or 5% of the thickness of the positive electrode active material layer 120. The thickness of the negative electrode coating layer 220 may range, for example, from ≥ 1 μm to ≤ 20 μm, from ≥ 2 μm to ≤ 10 μm, or from ≥ 3 μm to ≤ 7 μm. When the negative electrode coating layer 220 has an excessively small thickness such as, e.g., less than 1 μm, lithium dendrites formed between the negative electrode coating layer 220 and the negative electrode current collector 210 may collapse the negative electrode coating layer 220, thereby reducing cycle characteristics of the all-solid-state battery 10. When the negative electrode coating layer 220 has an excessively large thickness such as, e.g., greater than 20 μm, the all-solid-state battery 10 may have a decreased energy density and an increased internal resistance caused by the negative electrode coating layer 220, thereby reducing cycle characteristics of the all-solid-state battery 10.

Although not shown, a carbon layer may further be included to increase an adhesive force between the negative electrode coating layer 220 and the solid electrolyte layer 300. The negative electrode coating layer 220 is discussed in detail below with reference to FIGS. 7, 8A, and 8B.

Referring back to FIG. 1, the solid electrolyte layer 300 may be provided between the positive electrode layer 100 and the negative electrode layer 200. The solid electrolyte layer 300 may include a sulfide-based solid electrolyte with desired or improved lithium ion conductivity. The solid electrolyte in the solid electrolyte layer 300 may include a material that is the same as or different from one of materials included in the solid electrolyte in the positive electrode active material layer 120.

The solid electrolyte layer 300 may include a first solid electrolyte layer 310 and a second solid electrolyte layer 320. The first solid electrolyte layer 310 may be adjacent to the positive electrode layer 100, and the second solid electrolyte layer 320 may be adjacent to the negative electrode layer 200.

The second solid electrolyte layer 320 may be in direct contact with the negative electrode coating layer 220. Thus, the second solid electrolyte layer 320 may reduce or suppress lithium dendrites formed between the negative electrode coating layer 220 and the negative electrode current collector 210. The second solid electrolyte layer 320 may effectively reduce or suppress a negative electrode side reaction. Accordingly, the all-solid-state battery 10 according to examples of the present disclosure may improve in cell performance.

The solid electrolyte in the solid electrolyte layer 300 may have a substantially spherical or oval particulate shape.

The solid electrolyte in the solid electrolyte layer 300 may include a sulfide-based solid electrolyte. The solid electrolyte in the solid electrolyte layer 300 may be in an amorphous state, a crystalline state, or a mixture state thereof. The solid electrolyte may include at least one of sulfur (S), phosphorus (P), and lithium (Li) among component elements included in the sulfide-based solid electrolyte mentioned above. For example, the solid electrolyte may be a material including $Li_2S$-$P_2S_5$. When a material including $Li_2S$-$P_2S_5$ is utilized as the sulfide-based solid electrolyte material of the solid electrolyte, a mixing molar ratio of $Li_2S$ and $P_2S_5$ may be in a range of about 50:50 to about 90:10.

In an example embodiment, the solid electrolyte in the solid electrolyte layer 300 may include an argyrodite-type compound including $Li_{7-a}M_aPS_{6-c}X_c$. In the chemical formula above, X may be or include at least one of Cl, Br, or a combination thereof. M may be or include at least one of Na, K, Fe, Mg, Ca, Ag, Cu, Zr, Zn, or a combination thereof. Each of "a" and "c" in the above formula may be a real number in a range between and including 0 and 2.

The argyrodite-type solid electrolyte may have a density in a range of ≥ 1.5 g/cc to ≤ 2.0 g/cc. As the argyrodite-type solid electrolyte has a density that is equal to or greater than about 1.5 g/cc, it may be possible to decrease an internal resistance of an all-solid-state battery, and to reduce or prevent a solid electrolyte layer from short-circuit and penetration caused by the formation of lithium dendrites. The solid electrolyte in the solid electrolyte layer 300 may have an elastic modulus in a range of, for example, ≥ 15 GPa to ≤ 35 GPa.

The solid electrolyte layer 300 may further include a binder. The binder included in the solid electrolyte layer 300 may include, for example, at least one of styrene-butadiene rubber (SBR), polytetrafluoroethylene, polyvinylidenefluoride, polyethylene, or acrylate, but the present disclosure is not limited thereto. The binder of the solid electrolyte layer 300 may be the same as, or similar to, the binder of the positive electrode active material layer 120, or the binder of a negative electrode coating layer 220.

Referring back to FIG. 1, the first solid electrolyte layer 310 may have a first thickness t1, and the second solid electrolyte layer 320 may have a second thickness t2. The solid electrolyte layer 300 may have a third thickness t3. The first thickness t1 and the second thickness t2 may be different from each other. The second thickness t2 may be greater than the first thickness t1.

A reduction in thickness of the solid electrolyte layer 300 may cause an increase in energy density, but it may be challenging to reduce or suppress the formation of lithium dendrites in a negative electrode, and accordingly, there may be a likelihood of occurrence of short circuit.

In the solid electrolyte, an empty space may be generated at an interface between an electrode and an electrolyte, and the empty space may act as an interfacial resistance to induce a reduction in battery performance.

The electrode and the solid electrolyte layer may be simultaneously or contemporaneously pressed to decrease the interfacial resistance. In an example embodiment, since a sulfide-based solid electrolyte has both of high ionic conductivity and mechanical softness, a pressing process may be employed to fabricate an all-solid-state battery whose interfacial resistance is improved.

In an example embodiment of the present disclosure, the positive electrode layer 100 and the negative electrode layer 200 may be manufactured by being pressed in a fabrication process. In an example embodiment of the present disclosure, the positive electrode layer 100 and the negative electrode layer 200 may be manufactured by being pressed with different pressures in the pressing process. In an example embodiment of the present disclosure, the positive electrode layer 100 may be manufactured by being pressed with a pressure greater than the pressure of the negative electrode layer 200. For example, when nano-scale particles are applied to positive and negative electrode active materials, a contact area with a solid electrolyte may increase to improve an interfacial resistance. In an example embodiment, the positive electrode active material may have a polycrystalline form to improve adhesion to an electrode plate, capacity characteristics, and lifespan properties, and may include a secondary particle in which at least two primary particles are aggregated. In this case, an interfacial resistance between the positive electrode layer 100 and the first solid electrolyte layer 310 may be greater than the interfacial resistance between the negative electrode layer 200 and the second solid electrolyte layer 320, and thus a positive electrode stack may be manufactured by applying a pressure greater than the pressure applied to a negative electrode stack. The present disclosure, however, is not limited thereto, and the positive electrode layer 100 and the negative electrode layer 200 may be manufactured through a pressing process that applies different pressures thereto for various reasons.

In an example embodiment of the present disclosure, the solid electrolyte layer 300 may be divided into the first solid electrolyte layer 310 and the second solid electrolyte layer 320, and thus it may be possible to solve process-related issues arising from the fact that the interfacial resistance between the positive electrode layer 100 and the first solid electrolyte layer 310 is different from the interfacial resistance between the negative electrode layer 200 and the second solid electrolyte layer 320. For example, an all-solid-state battery fabricated according to a fabrication method which is discussed below may provide an all-solid-state battery obtained by applying different pressures to the positive electrode stack and the negative electrode stack.

In an example embodiment of the present disclosure, the solid electrolyte layer 300 may be divided into the first solid electrolyte layer 310 and the second solid electrolyte layer 320, and the first and second solid electrolyte layers 310 and 320 may be adjusted to have their thicknesses be different from each other, with the result that it may be possible to increase an energy density and to reduce or suppress the formation of lithium dendrites in the negative electrode. Accordingly, the all-solid-state battery 10 may have improved stability against short-circuit risks and impacts, and an increased high energy density.

A ratio (t2/t1) of the second thickness t2 to the first thickness t1 may range from ≥ 1 to ≤ 20. For example, the ratio (t2/t) of the second thickness t2 to the first thickness t1 may range from ≥ 2 to ≤ 15, from ≥ 4 to ≤ 11, or from ≥ 4.5 to ≤ 5.5. When the ratio (t2/t1) of the second thickness t2 to the first thickness t1 falls within the range above, it may be possible to increase an energy density and to reduce or suppress the formation of lithium dendrites in an negative electrode, thereby providing the all-solid-state battery 10 with improved stability against short-circuit risks and impacts, and with an increased high energy density.

The first thickness t1 may be equal to or less than about 30 μm. For example, the first thickness t1 may be equal to or less than about 25 μm, 20 μm, 14 μm, or 10 μm. The first thickness t1 may be equal to or greater than about 0.1 μm. For example, the first thickness t1 may be equal to or greater than about 1 μm, 2 μm, 4 μm, or 5 μm. When the first thickness t1 is greater than the range above, the all-solid-state battery 10 may have a reduced energy density. When the first thickness t1 is less than the range above, the first thickness t1 may be less than the thickness of an active material powder in a positive electrode, and it may be difficult to form an interface.

The second thickness t2 may be equal to or greater than about 30 μm. For example, the second thickness t2 may be equal to or greater than about 35 μm, 40 μm, 45 μm, 50 μm, 55 μm, or 60 μm. The second thickness t2 may be equal to or less than about 120 μm. For example, the second thickness t2 may be equal to or less than about 90 μm or 60 μm. When the second thickness t2 is less than the range above, it may be difficult to reduce or suppress the formation of lithium dendrites in a negative electrode, and accordingly there may be a likelihood of occurrence of short circuit. When the second thickness t2 is greater than the range above, the all-solid-state battery 10 may have a reduced energy density.

The third thickness t3 may be equal to or less than about 120 μm. For example, the third thickness t3 may be equal to or less than about 90 μm or 60 μm. The third thickness t3 may be equal to or greater than about 10 μm. For example, the third thickness t3 may be equal to or greater than about 30 μm or 50 μm. When the third thickness t3 is greater than the range above, the all-solid-state battery 10 may have a reduced energy density.

Referring to FIGS. 1 and 2, an area of the positive electrode layer 100 and an area of the negative electrode layer 200 may be different from each other. For example, the area of the negative electrode layer 200 may be greater than the area of the positive electrode layer 100. The positive electrode layer 100 may substantially completely inwardly overlap the negative electrode layer 200.

In an example embodiment of the present disclosure, the first solid electrolyte layer 310 may have substantially the same area as the positive electrode layer 100. The second solid electrolyte layer 320 may have substantially the same area as the negative electrode layer 200.

Referring still to FIGS. 1 and 2, the first solid electrolyte layer 310 may have a first width W1 in a first direction D1. The second solid electrolyte layer 320 may have a second width W2 in the first direction D1. The first width W1 may be less than the second width W2.

A difference between the second width W2 and the first width W1 may be equal to or less than about 10 mm. For example, the difference between the second width W2 and the first width W1 may be equal to less than about 8 mm, 5 mm, or 3 mm. The difference between the second width W2 and the first width W1 may be equal to or greater than about 0.1 mm, 0.5 mm, or 1 mm. Accordingly, the difference between the second width W2 and the first width W1 may be in a range of ≥ 0.1 mm to ≤ 8 mm. When the difference between the second width W2 and the first width W1 is greater than the range above, a size of the positive electrode layer 100 may be relatively reduced to decrease a discharge capacity and an energy density of the all-solid-state battery 10. When the difference between the second width W2 and the first width W1 is less than the range above, it may be difficult to reduce or suppress the formation of lithium dendrites in a negative electrode, and accordingly there may be a likelihood of occurrence of short circuit.

A ratio (W2/W1) of the second width W2 to the first width W1 may range from ≥ 1 to ≤ 1.6. For example, the ratio (W2/W1) of the second width W2 to the first width W1 may range from ≥ 1 to ≤ 1.5, from ≥ 1 to ≤ 1.4, from ≥ 1 to ≤ 1.3, from ≥ 1 to ≤ 1.2, or from ≥ 1 to ≤ 1.1.

When the ratio (W2/W1) of the second width W2 to the first width W1 is greater than the range above, the all-solid-state battery 10 may have a reduced energy density.

Referring still further to FIGS. 1 and 2, the first solid electrolyte layer 310 may have a third width W3 in a second direction D2. The second solid electrolyte layer 320 may have a fourth width W4 in the second direction D2. The third width W3 may be less than the fourth width W4.

A difference between the third width W3 and the fourth width W4 may be equal to or less than about 10 mm. For example, the difference between the third width W3 and the fourth width W4 may be equal to or less than about 8 mm, 5 mm, or 3 mm. The difference between the third width W3 and the fourth width W4 may be equal to greater than about 0.1 mm, 0.5 mm, or 1 mm. Accordingly, the difference between the third width W3 and the fourth width W4 may be in a range of ≥ 0.1 mm to ≤ 8 mm. When the difference between the third width W3 and the fourth width W4 is greater than the range above, a size of the positive electrode layer 100 may be relatively reduced to decrease a discharge capacity and an energy density of the all-solid-state battery 10. When the difference between the third width W3 and the fourth width W4 is less than the range above, it may be difficult to reduce or suppress the formation of lithium dendrites in a negative electrode, and accordingly there may be a likelihood of occurrence of short circuit.

A ratio (W4/W3) of the fourth width W4 to the third width W3 may range from ≥ 1 to ≤ 1.6. For example, the ratio (W4/W3) of the fourth width W4 to the third width W3 may range from ≥ 1 to ≤ 1.5, from ≥ 1 to ≤ 1.4, from ≥ 1 to ≤ 1.3, from ≥ 1 to ≤ 1.2, or from ≥ 1 to ≤ 1.1.

When the ratio (W4/W3) of the fourth width W4 to the third width W3 is greater than the range above, the all-solid-state battery 10 may have a reduced energy density.

FIG. 3 illustrates a cross-sectional view showing an all-solid-state battery according to an example embodiment of the present disclosure. In the example embodiment that follows, a detailed description of technical features repetitive to those discussed above with reference to FIGS. 1 and 2 is omitted, and a difference thereof is discussed in detail.

Referring to FIG. 3, the negative electrode layer 200 of the all-solid-state battery 10 may further include a lithium metal layer 400 between the negative electrode current collector 210 and the negative electrode coating layer 220. The lithium metal layer 400 may have an increased thickness when the all-solid-state battery 10 is charged. The negative electrode coating layer 220 may be configured as a protection layer for the lithium metal layer 400, and simultaneously or contemporaneously may reduce or suppress growth of lithium dendrites from the lithium metal layer 400.

The lithium metal layer 400 may be or include a metal thin layer including lithium or lithium alloy. The lithium alloy may be or include, for example, at least one of Li-Al alloy, Li-Sn alloy, Li-In alloy, Li-Ag alloy, Li-Au alloy, Li-Zn alloy, Li-Ge alloy, or Li-Si alloy, but any suitable lithium alloys may be possible. The lithium metal layer 400 may include lithium, or one of the alloys mentioned above. Alternatively, the lithium metal layer 400 may include various types of alloy.

The lithium metal layer 400 may have a fifth width W5 in the first direction D1. The fifth width W5 may be the same as or greater than the first width W1 discussed above with respect to FIG. 1. The fifth width W5 may be the same as or less than the second width W2 discussed above with respect to FIG. 1. For example, the fifth width W5 may be greater than the first width W1 and less than the second width W2.

FIG. 4 illustrates a cross-sectional view showing an all-solid-state battery according to an example embodiment of the present disclosure. In the example embodiment that follows, a detailed description of technical features repetitive to those discussed above with reference to FIGS. 1 to 3 is omitted, and a difference thereof is explained in detail.

Referring to FIG. 4, a bi-cell all-solid-state battery 20 may include a first mono-cell 510 and a second mono-cell 520.

Each of the first and second mono-cells 510 and 520 may include a positive electrode layer 100, a negative electrode layer 200, and a solid electrolyte layer 300 disposed between the positive electrode layer 100 and the negative electrode layer 200. The solid electrolyte layer 300 in each of the first and second mono-cells 510 and 520 may include a first solid electrolyte layer 310 that is adjacent to the positive electrode layer 100 and has a first width W1 and a first thickness t1, and may also include a second solid electrolyte layer 320 that is adjacent to the negative electrode layer 200 and has a second width W2 and a second thickness t2. The second mono-cell 520 may be disposed symmetrically above and below the first mono-cell 510. The positive electrode layer 100 of the first mono-cell 510 may face the positive electrode layer 100 of the second mono-cell 520.

FIG. 5 illustrates a cross-sectional view showing an all-solid-state battery according to an example embodiment of the present disclosure. In the example embodiment that follows, a detailed description of technical features repetitive to those discussed above with reference to FIGS. 1 to 4 is omitted, and a difference thereof is discussed in detail.

Referring to FIG. 5, the bi-cell all-solid-state battery 20 may further include an elastic member ELP disposed on one side of the negative electrode layer 200. The elastic member ELP may absorb a volume change (expansion) of the all-solid-state battery 20 during charge and discharge, and may be formed of a material that is capable of elastic deformation, and for example, which elastic modulus is less than the elastic moduli of the positive and negative current collectors 110 and 210. The material of the elastic member ELP may have a stress-strain curve having a slope that is equal to or less than about 200 MPa at a displacement of equal to or less than about 80%. For example, the material of the elastic member ELP may have a stress-strain curve having a slope that is equal to or less than about 50 MPa at a displacement that is equal to or less than about 80%, or a slope that is equal to or less than about 10 MPa at a displacement that is equal to or less than about 50%.

The material of the elastic member ELP may include at least one of epoxy resin, acrylic resin, polyimide resin, polyester resin, polypropylene resin, polyamide resin, polystyrene resin, polyvinylchloride resin, polycarbonate resin, fluororesin such as PTFE, and silicone rubber, but the present disclosure is not limited thereto. The elastic member ELP may be formed of or include a single material or a combination of various materials. The elastic member ELP may include the same material or different materials. The elastic member ELP may include a dielectric material, and may insulate the bi-cell all-solid-state batteries 20 from each other. The dielectric material may have a surface resistance that is equal to or greater than about $1.0x10^{17}$ $\Omega \cdot m^2$, and for example, may be or include a fluororesin such as PTEF or a silicon rubber.

As the elastic member ELP is disposed between the bi-cell all-solid-state batteries 20, it may be possible to disperse a pressure generated when the all-solid-state battery 20 is charged, and accordingly to reduce an uneven distribution of pressure applied to each all-solid-state battery 10 during charge and discharge. In addition, this may reduce or suppress an electrolyte layer from cracks or deformation occurring due to repetition of charge and discharge and a reduction in battery properties such as cycle characteristics.

FIG. 6 illustrates a cross-sectional view showing an all-solid-state battery according to an example embodiment of the present disclosure. In the example embodiment that follows, a detailed description of technical features repetitive to those discussed above with reference to FIGS. 1 to 5 is omitted, and a difference thereof is discussed in detail.

Referring to FIG. 6, the all-solid-state battery 20 may further include an inactive member INM disposed on a lateral side of the positive electrode layer 100 and a lateral side of the first solid electrolyte layer 310. As the inactive member INM is included, the solid electrolyte layer 300 may be hindered or prevented from being cracked when the all-solid-state battery 20 is fabricated and/or when the all-solid-state battery 20 is charged and discharged, and the all-solid-state battery 20 may thus improve in cycle characteristics.

The inactive member INM may include one or more of lithium ion insulators and lithium ion conductors. The inactive member INM may be or include an electronic insulator. For example, the inactive member INM may not be an electronic conductor. The inactive member INM may be or include an ionic insulator. For example, the inactive member INM may not be an ionic conductor. The inactive member INM may include, for example, an organic material, an inorganic material, or an inorganic-organic composite material. The organic material may be or include, for example, a polymer. The inorganic material may be or include a ceramic, such as metal oxide. The organic-inorganic composite material may be or include a composite of polymer and metal oxide.

The inactive member INM may be disposed between the second solid electrolyte layer 320 of the first mono-cell 510 and the second solid electrolyte layer 320 of the second mono-cell 520 in the direction D3. As the inactive member INM is included, a substantially uniform pressing may be practicable during the fabrication of the all-solid-state battery 20 to hinder or prevent the solid electrolyte layer 300 from being cracked, and as a result to improve cycle characteristics of the all-solid-state battery 20.

A thickness of the inactive member INM may be the same as or less than a sum of the thickness t1 of the first solid electrolyte layer 310 and a thickness of the positive electrode layer 100 in the first mono-cell 510, and/or a sum of the thickness t1 of the first solid electrolyte layer 310 and a thickness of the positive electrode layer 100 in the second mono-cell 520. The thickness of the inactive member INM may be greater than the thickness of the positive electrode layer 100. When the thickness of the inactive member INM is less than the thickness of the positive electrode layer 100, a desired pressure may not be applied to a lateral surface of the second solid electrolyte layer 320, and thus the solid electrolyte layer 300 may suffer from cracks. When the thickness of the inactive member INM is greater than the sum of the thickness t1 of the first solid electrolyte layer 310 and the thickness of the positive electrode layer 100 in the first mono-cell 510, and/or the sum of the thickness t1 of the first solid electrolyte layer 310 and the thickness of the positive electrode layer 100 in the second mono-cell 520, a sufficient pressure may not be applied to the positive electrode layer 100 and the first solid electrolyte layer 310.

FIG. 7 illustrates an enlarged view showing section "M" of FIG. 1. FIGS. 8A and 8B illustrate conceptual diagrams showing cross-linked polymer structures. In the example embodiments that follow, a detailed description of technical features repetitive to those discussed above with reference to FIGS. 1 to 6 is omitted, and differences are discussed in detail.

Referring to FIG. 7, the negative electrode coating layer 220 may include a metal-carbon composite CPL, a porous polymer composite PPC, and a binder BND as an additive. The metal-carbon composite CPL may include a metal MET and a carbon-based material CBM.

The metal-carbon composite CPL may be or include a composite composed of lithiophilic metal and carbon. The metal MET may be or include lithiophilic metal, and the lithiophilic metal may accelerate the efficient adsorption and migration of lithium ions. The lithiophilic metal may have high surface energy and induce efficient adsorption of lithium ions, leading to strong chemical interactions with lithium.

For example, the metal-carbon composite CPL may include at least one metal MET such as or including at least one of gold (Au), platinum (Pt), palladium (Pd), silicon (Si), silver (Ag), aluminum (Al), magnesium (Mg), germanium (Ge), copper (Cu), indium (In), nickel (Ni), bismuth (Bi), tin (Sn), manganese (Mn), and zinc (Zn). The metal MET may improve an electrical conductivity of the negative electrode layer 200. For example, the metal MET may form an alloy with lithium, and may form a lithium deposition layer on a lower portion of the negative electrode coating layer 220.

The metal MET may be or include a nano-particle. The metal MET may have a particle diameter in a range of, for example, $\geq$ 5 nm to $\leq$ 80 nm. For example, the particle diameter may indicate a diameter measured by randomly selecting approximately 30 metals MET from an electron microscope image of the metal-carbon composite CPL. The metal MET may have a crystal size in a range of ≥ 30 nm to ≤ 60 nm, or ≥ 50 nm to ≤ 60 nm. For example, the crystal size may be analyzed by using X-ray diffraction (XRD). When the particle diameter and the crystal size of the metal MET fall within the range above, the negative electrode coating layer 220 may have a substantially uniform current density and an all-solid-state battery may have an increased lifespan.

The metal MET in the metal-carbon composite CPL may be present in an amount in a range of ≥ 3 wt% to ≤ 40 wt%, ≥ 5 wt% to ≤ 40 wt%, ≥ 10 wt% to ≤ 40 wt%, ≥ 12 wt% to ≤ 40 wt%, ≥ 12 wt% to ≤ 20 wt%, or ≥ 12 wt% to ≤ 15 wt% relative to the total weight of the metal-carbon composite CPL. When the amount of the metal MET falls within the range above, lithium ions released from a positive electrode active material may migrate toward the negative electrode layer 200 when an all-solid-state battery is charged, and a lithium deposition layer may be substantially mostly formed between the negative electrode current collector 210 and the negative electrode coating layer 220.

The carbon-based material CBM may be or include at least one of amorphous carbon, crystalline carbon, or a mixture thereof. For example, the carbon-based material CBM in the metal-carbon composite CPL may include a $\pi$-$\pi$ bonding.

The amorphous carbon may include, for example, at least one of carbon black, acetylene black, Denka black, furnace black, ketjen black, activated carbon, or a combination thereof. The carbon black may include, for example, Super P™ commercially available from Timcal Ltd.

The amorphous carbon may be or include a single particle, or an assembly in the form of a secondary particle in which primary particles are assembled. When the amorphous carbon is a single particle, the amorphous carbon may be or include an amorphous carbon particle which has an average particle diameter that is equal to or less than about 100 nm, for example, which has a nano-size of ≥ 10 nm to ≤ 100 nm.

When the amorphous carbon is an assembly, a primary particle may have a particle diameter in a range of ≥ 20 nm to ≤ 100 nm, and a secondary particle may have a particle diameter in a range of ≥ 1 μm to ≤ 20 μm.

For example, the particle diameter of the primary particle may be equal to or greater than about 20 nm, 30 nm, 40 nm, 50 nm, 60 nm, 70 nm, 80 nm, or 90 nm, or may be equal to or less than about 100 nm, 90 nm, 80 nm, 70 nm, 60 nm, 50 nm, 40 nm, or 30 nm.

For example, the particle diameter of the secondary particle may be equal to or greater than 1 μm, 3 μm, 5 μm, 7 μm, 10 μm, or 15 μm, or may be equal to or less than about 20 μm, 15 μm, 10 μm, 7 μm, 5 μm, or 3 μm.

For example, the primary particle may have a substantially spherical shape, a substantially oval shape, a plate shape, or a combination thereof. For another example, the primary particle may have a substantially spherical shape, a substantially oval shape, or a combination thereof.

The crystalline carbon may include, for example, natural graphite, artificial graphite, carbon nano-tube, graphene, or a combination thereof. The crystalline carbon may have an amorphous shape, a plate shape, a flake shape, a substantially spherical shape, or a fibrous shape.

In an example embodiment, the metal-carbon composite CPL may include a mixture of carbon black and silver (Ag).

The carbon-based material CBM in the metal-carbon composite CPL may be present in an amount in a range of ≥ 60 wt% to ≤ 97 wt%, ≥ 60 wt% to ≤ 95 wt%, ≥ 60 wt% to ≤ 90 wt%, ≥ 60 wt% to ≤ 88 wt%, ≥ 80 wt% to ≤ 88 wt%, or ≥ 85 wt% to ≤ 88 wt% relative to the total weight of the metal-carbon composite CPL. When the amount of the carbon-based material CBM falls within the range above, a lithium deposition layer may be substantially mostly formed between the negative electrode current collector 210 and the negative electrode coating layer 220 when an all-solid-state battery is charged.

The metal-carbon composite CPL in the negative electrode coating layer 220 may be present in an amount in a range of ≥ 75 wt% to ≤ 95 wt%, ≥ 77 wt% to ≤ 95 wt%, or ≥ 77 wt% to ≤ 92 wt% relative to the total weight of the negative electrode coating layer 220.

The negative electrode coating layer 220 may include at least one additive, and the additive may be or include at least one of, for example, the binder BND, a filler, a coating agent, a dispersant, and an ion conductivity agent. For example, the negative electrode coating layer 220 may include a binder BND, and may further include at least one of a filler, a coating agent, a dispersant, and an ion conductivity agent.

For example, the binder BND may be or include at least one of an aqueous binder, an organic binder, or a combination thereof. The binder may be or include, for example, at least one of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymers, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, or a combination thereof.

For example, the aqueous binder may include at least one of styrene-butadiene rubber (SBR), carboxymethyl cellulose (CMC), or a combination thereof. When the aqueous binder is included, water may be utilized as a solvent.

For example, the organic binder may include polytetrafluoroethylene or polyvinylidenefluoride. When the organic binder is included, N-methylpyrrolidone (NMP) may be utilized as a solvent.

The additive in the negative electrode coating layer 220 may be present in an amount in a range of ≥ 1 wt% to ≤ 10 wt%, ≥ 2 wt% to ≤ 10 wt%, or ≥ 4 wt% to ≤ 10 wt% relative to the total weight of the negative electrode coating layer 220.

The negative electrode coating layer 220 may include the porous polymer composite PPC. The porous polymer composite PPC may include an acrylic polymer, and the acrylic polymer may be or include at least one of acrylic acid, polyacrylic acid, polyacrylamide, polyacrylonitrile, poly(methyl methacrylate), polymethacrylate, or a combination thereof. The porous polymer composite PPC may include a cross-linked polymer. The cross-linked polymer is further discussed below with reference to FIGS. 8A and 8B.

The porous polymer composite PPC may have a particulate shape. The particulate shape of the porous polymer composite PPC may be a substantially spherical shape, a substantially oval shape, a plate shape, or a combination thereof. The porous polymer composite PPC may be present in a particulate form in which chains are entangled in the negative electrode coating layer 220, and may not be present in a crushed form in the negative electrode coating layer 220. In an example embodiment, each, or at least one, particle of the porous polymer composite PPC may be present in a sponge form.

An average particle diameter of the porous polymer composite PPC may be less than the average particle diameter of the metal-carbon composite CPL. The average particle diameter of the metal-carbon composite CPL may be a sum of an average particle diameter of the carbon-based material CBM and an average particle diameter of the metal MET. For example, the average particle diameter of the porous polymer composite PPC may range from ≥ 500 nm to ≤ 1 μm, and the average particle diameter of the metal-carbon composite CPL may range from ≥ 1 μm to ≤ 25 μm.

The porous polymer composite PPC may be configured to store or adsorb lithium when an all-solid-state battery is charged and discharged. The storage or adsorption of lithium may occur when the average particle diameter of the porous polymer composite PPC is equal to or less than about 1 μm.

An amount of the porous polymer composite PPC in the negative electrode coating layer 220 may be greater than the amount of the additive in the negative electrode coating layer 220. For example, the amount of the porous polymer composite PPC in the negative electrode coating layer 220 may be greater than the amount of the binder BND in the negative electrode coating layer 220. The amount of the porous polymer composite PPC in the negative electrode coating layer 220 may be less than the amount of the metal-carbon composite CPL in the negative electrode coating layer 220.

The amount of the porous polymer composite PPC in the negative electrode coating layer 220 may be in a range of ≥ 1 wt% to ≤ 25 wt%, ≥ 2 wt% to ≤ 25 wt%, ≥ 5 wt% to ≤ 25 wt%, ≥ 2 wt% to ≤ 20 wt%, or ≥ 5 wt% to ≤ 20 wt% relative to the total weight of the negative electrode coating layer 220. When the amount of the porous polymer composite PPC falls within the range above, lithium ions may be adsorbed or fixed into pores in the porous polymer composite PPC when an all-solid-state battery is charged, and thus a lithium deposition layer may be reduced or prevented from being excessively formed. For example, an all-solid-state battery may be reduced or suppressed from excessive volume expansion caused by lithium when an all-solid-state battery is charged. In addition, lithium ions may be adsorbed or fixed into pores in the porous polymer composite PPC when an all-solid-state battery is charged, and thus a lithium deposition layer may be substantially uniformly formed. For example, a substantially uniform electrodeposition of lithium may be induced to the porous polymer composite PPC. Consequently, in an all-solid-state battery according to an example embodiment of the present disclosure, as the negative electrode coating layer 220 includes the porous polymer composite PPC, it may be possible to reduce or prevent the occurrence of cracks in the negative electrode layer 200 when the all-solid-state battery is charged and discharged, and to improve stability of the all-solid-state battery.

In addition, according to the present disclosure, as a volume expansion of the all-solid-state battery is reduced or suppressed during charge and discharge, the all-solid-state battery may be fabricated under a desired pressurized environment. In the manufacture and assembly of electrode plates (positive and negative electrodes), a proper and substantially uniform pressure may be applied to reduce or prevent separation and detachment of components caused by excessive pressure. In conclusion, the all-solid-state battery may have a desired or improved battery lifespan.

FIGS. 8A and 8B illustrate conceptual diagrams showing structures of cross-linked polymers included in the porous polymer composite PPC.

FIG. 8A depicts a simplified conceptual diagram showing a first structure LPST1 of a cross-linked polymer according to an example embodiment of the present disclosure. Referring to FIG. 8A, the cross-linked polymer may include a main chain "M" and a plurality of side chains "S" that extend from the main chain M. For example, the plurality of side chains S may include a side chain S1 that extends from the main chain M and a side chain S2 that extends from the side chain S1. In addition, the main chain M and the plurality of side chains S of the cross-linked polymer may each include a terminal end "E" where a cross-linking or polymerization reaction is terminated.

The cross-linked polymer may be formed by a cross-linking reaction of a multifunctional polymerizable monomer or a cross-linker. For example, the cross-linked polymer may include a repeating unit derived from the cross-linker. For example, the cross-linker may be a material that is electrochemically stable at an operating environment of a negative electrode (e.g., at a voltage of about 4.3 V or higher) using a negative electrode active material.

In an example embodiment, the cross-linker may include a functional group capable of undergoing a cross-linking reaction. For example, the cross-linker may include two or more double-bond functional groups, and for example, the double-bond functional group may be or include a (meth)acrylic group.

In an example embodiment, the cross-linker may include at least one of pentaerythritol tetraacrylate, pentaerythritol tetramethacrylate, trimethylolpropane triacrylate, trimethylolpropane trimethacrylate (TMPTMA), propoxylated (3) trimethylolpropane triacrylate (PO(3)TMPTA), propoxylated (6) trimethylolpropane triacrylate (PO(6)TMPTA), ethoxylated trimethylolpropane triacrylate, di(trimethylolpropane) tetraacrylate, pentaerythritol triacrylate (PETA), propoxylated glyceryl triacrylate, tris(2-hydroxyethyl) isocyanurate triacrylate (THEICTA), and dipentaerythritol pentaacrylate (DPEPA).

The cross-linked polymer may further include a repeating unit derived from an ionic monomer. The ionic monomer may include at least one double-bond functional group and at least one ionic functional group.

The double-bond functional group of the ionic monomer may include at least one of an allyl group, an acryl group, a vinyl group, or any combination thereof. For example, the ionic monomer may include at least one of an acryl group, a vinyl group, or any combination thereof. The ionic functional group of the ionic monomer may include at least one of a cationic functional group, an anionic functional group, or a combination thereof. For example, when the ionic monomer includes a cationic functional group, the ionic monomer may be or include a cationic monomer. For example, when the ionic monomer includes an anionic functional group, the ionic monomer may be or include an anionic monomer. For example, when the ionic monomer includes both of a cationic functional group and an anionic functional group, the ionic monomer may be or include a zwitterionic monomer.

In various examples, the porous polymer composite PPC may further include a linear polymer. The linear polymer may include at least one of polyethylene (PE), styrene-butadiene rubber (SBR), nylon, carboxymethyl cellulose (CMC), polyethylene oxide (PEO), polyvinylidenefluoride (PVDF), vinylidenefluoride-hexafluoropropylene (PVDF-HFP), polystyrene-b-poly(ethylene oxide) block copolymer (PS-PEO), poly(styrene-butadiene), poly(styrene-isoprene-styrene), poly(styrene-b-divinylbenzene) block copolymer, poly(styrene-ethylene oxide-styrene) block copolymer, polystyrene sulfonate (PSS), polyvinyl fluoride (PVF), polyethylene glycol (PEG), polyacrylonitrile (PAN), polytetrafluoroethylene (PTFE), polyethylene dioxythiophene (PEDOT), polypyrrole (PPY), polyaniline, polyacetylene, or a combination thereof.

FIG. 8B depicts a simplified conceptual diagram showing a second structure LPST2 of a cross-linked polymer according to an example embodiment of the present disclosure. Referring to FIG. 8B, the cross-linker may allow a plurality of linear polymers CLP to have a network polymer. The second structure LPST2 of the cross-linked polymer may include a micro-region MG between neighboring linear polymers CLP. The micro-region MG may include a pore PRS formed when the porous polymer composite PPC is manufactured as discussed below. The pore PRS may be formed as a solvent evaporates during a drying process of negative electrode slurry that includes a polymer gel. For example, the pore PRS may be a void or empty space formed in the micro-region MG when a solvent completely or partially evaporates.

As the porous polymer composite PPC has the second structure LPST2, a plurality of pores may be present in the negative electrode coating layer 220. The negative electrode coating layer 220 may have a porosity in a range of $\geq$ 20% to $\leq$ 60%, $\geq$ 20% to $\leq$ 50%, or $\geq$ 20% to $\leq$ 40%. The porosity may be defined to refer to a pore distribution within the negative electrode coating layer 220. The porosity distribution may be obtained through analysis results of cross-sectional samples of an electrode by using, e.g., an ion milling device. An energy dispersive spectrometer may be used to analyze the cross-sectional samples of an electrode.

When the porosity of the negative electrode coating layer 220 falls within the range above, lithium ions may be adsorbed, or fixed into pores, in the negative electrode coating layer 220 when an all-solid-state battery is charged, and thus a lithium deposition layer may be hindered or prevented from being excessively formed. For example, an all-solid-state battery may be hindered or suppressed from excessive volume expansion caused by lithium when an all-solid-state battery is charged. In addition, lithium ions may be adsorbed or fixed into pores in the negative electrode coating layer 220 when an all-solid-state battery is charged, and thus a lithium deposition layer may be substantially uniformly formed. Consequently, in an all-solid-state battery according to an example embodiment of the present disclosure, as pores are included in the negative electrode coating layer 220, it may be possible to reduce or prevent cracks of the negative electrode layer 200 when the all-solid-state battery is charged and discharged, and to improve stability of the all-solid-state battery.

FIGS. 9A to 9D and 10 illustrate conceptual diagrams showing a method of fabricating an all-solid-state battery according to an example embodiment of the present disclosure.

Referring to FIGS. 9A and 9B, an all-solid-state battery 10 according to an example embodiment of the present disclosure may be fabricated by applying a first pressure to form a positive electrode stack after stacking a positive electrode layer 100 and a first solid electrolyte layer 310, applying a second pressure to form a negative electrode stack after stacking a negative electrode layer 200 and a second solid electrolyte layer 320, and then combining the positive electrode stack and the negative electrode stack so that the first solid electrolyte layer 310 and the second solid electrolyte layer 320 to face each other.

For example, the formation of the negative electrode stack may include forming a polymer gel, forming a negative electrode slurry by mixing at least one of a first solvent, a metal-carbon composite, a binder, and the polymer gel, and coating the negative electrode slurry on a negative electrode current collector to form a negative electrode coating layer.

The formation of the polymer gel may include forming a polymer mixture by mixing at least one of a second solvent, an acrylic polymer, an amide-based compound, a base, and an oxidizing agent, inducing gelation of the polymer mixture, crushing the gelled polymer mixture, performing an ultrasonic process on the crushed polymer mixture to form fine polymer gels, and filtering the fine polymer gels.

The amide-based compound may be configured as a cross-linker, and may be or include a diacrylamide-based polymer such as N,N'-methylenebisacrylamide and poly(ethylene glycol)diacrylamide. The base may be or include at least one of sodium hydroxide, lithium hydroxide, potassium hydroxide, or a combination thereof. The oxidizing agent may be or include at least one of ammonium persulfate, potassium persulfate, or a combination thereof. The second solvent may be or include at least one of water, tetrahydrofuran, methanol, ethanol, or a combination thereof.

The acrylic polymer, the amide-based compound, the base, and the oxidizing agent may be mixed in a weight ratio of about 1 : (0.01 to 0.5) : (0.3 to 2) : (0.001 to 0.3) or about 1: (0.02 to 0.2) : (0.4 to 1) : (0.001 to 0.1). In the case where the mixing ratio of the acrylic polymer, the amide-based compound, the base, and the oxidizing agent falls within the range above, when the polymer gel is included in the negative electrode coating layer, the polymer gel may shrink during a drying process in forming the negative electrode coating layer, such that a pore may be desiredly formed and the polymer gel may maintain the shape thereof.

The gelation of the polymer mixture may include adding a catalyst to the polymer mixture to induce gelation. An amine-based compound may be included as the catalyst, and for example, the catalyst may include tetramethylenediamine. Alternatively, the gelation of the polymer mixture may include annealing the polymer mixture without addition of a catalyst to induce gelation. The annealing process may be performed at a temperature in a range of ≥ 50°C to ≤ 100°C for a duration in a range of ≥ 1 hour to ≤ 5 hours.

A process for washing the polymer mixture with water may further be performed before gelation of the polymer mixture and crushing of the gelled polymer mixture. The crushing of the gelled polymer mixture may be performed by using a homogenizer at a rotation speed in a range of ≥ 5,000 rpm to ≤ 14,000 rpm for a duration in a range of ≥ 2 minutes to ≤ 10 minutes. The formation of the fine polymer gels by performing an ultrasonic process on the crushed polymer mixture may be performed at a range of ≥ 5 W to ≤ 30 W for a duration in a range of ≥ 1 minute to ≤ 5 minutes. The filtration of the fine polymer gels may be formed by a syringe filtering.

In the present disclosure, the positive electrode stack and the negative electrode stack may be fabricated by employing an individual pressurization method such that the first pressure and the second pressure may be differently or independently controlled. Through this process, a relatively lower pressure may be applied to either the positive electrode stack or the negative electrode stack which could be damaged when pressed with high pressure due to the low mechanical strength thereof, or due to significant structural imbalance. The first pressure may be greater than the second pressure.

The formation of the positive electrode stack and the negative electrode stack may include performing a pressing process in which a roll press is applied. The present disclosure, however, is not necessarily limited to this method, and any suitable pressing process may be used as long as the pressing process is applicable to the technical fields in the art. For example, it may be possible to apply a pressing process such as a hydraulic plate press and a warm isostatic press.

When a roll press is applied in forming the positive electrode stack, the first pressure may range from ≥ 1 ton/cm to ≤ 5 tons/cm, for example, from ≥ 1.5 tons/cm to ≤ 4.0 tons/cm or from ≥ 2 tons/cm to ≤ 3.5 tons/cm. For example, the first pressure may be equal to about 3.5 tons/cm.

When a roll press is applied in forming the negative electrode stack, the second pressure may range from ≥ 0.5 tons/cm to ≤ 4.5 tons/cm, for example, from ≥ 1.0 ton/cm to ≤ 3.5 tons/cm or from ≥ 1.5 tons/cm to ≤ 3.0 tons/cm. For example, the second pressure may be equal to about 3.0 tons/cm.

The pressing process may be executed at a relatively high temperature. For example, the pressing process may be performed at a temperature in a range of ≥ 60°C to ≤ 180°C, ≥ 80°C to ≤ 150°C, or ≥ 100°C to ≤ 130°C.

The formation of the positive electrode stack and the negative electrode stack may include performing a pre-heating process before performing the pressing process. For example, the positive electrode stack and the negative electrode stack may be pre-heated to a range of ±10°C or ±5°C of a temperature at which the pressing process is performed. The pre-heating process may reduce or prevent damage from being caused in the positive electrode stack and the negative electrode stack due to rapid change in temperature in a high-temperature pressing process.

Referring back to FIGS. 9A to 9D, in a method of fabricating an all-solid-state battery according to an example embodiment of the present disclosure, the formation of the positive electrode stack may include stacking a first functional layer FNL1 on the first solid electrolyte layer 310 before applying the first pressure, and the formation of the negative electrode stack may include stacking a second functional layer FNL2 on the second solid electrolyte layer 320 before applying the second pressure. The method may further include removing the first functional layer FNL1 and the second functional layer FNL2 before binding the positive electrode stack and the negative electrode stack. The first functional layer FNL1 and the second functional layer FNL2 may hinder or prevent a solid electrolyte layer from being directly exposed in a high-temperature pressing process, and a solid electrolyte may thus be substantially protected from damage.

The first functional layer FNL1 and the second functional layer FNL2 may include a plate or foil including at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The first functional layer FNL1 and the second functional layer FNL2 may include at least one of polyethylene terephthalate (PET), polycarbonate (PC), polyimide (PI), or a mixture thereof.

Referring to FIG. 10, the all-solid-state battery 10 according to an example embodiment of the present disclosure may be fabricated by binding the positive electrode stack and the negative electrode stack with each other, and applying a third pressure to allow the first solid electrolyte layer 310 and the second solid electrolyte layer 320 to contact each other.

The formation of the positive electrode stack and the negative electrode stack may include performing a pressing process in which a hydraulic plate press is applied. The present disclosure, however, is not necessarily limited to this method, and any suitable pressing process may be used as long as the pressing process is applicable in the art. For example, it may be possible to apply a pressing process such as a roll press and a warm isostatic press.

When a roll press is applied in fabricating the all-solid-state battery 10, the third pressure may be equal to or greater than about 0.1 tons/cm. For example, the third pressure may be equal to or greater than about 0.5 tons/cm or 1.0 ton/cm. The third pressure may be equal to or less than about 2.0 tons/cm. For example, a linear pressure of the third pressure may be equal to or less than about 1.5 tons/cm.

FIG. 11 illustrates a conceptual diagram showing a method of fabricating an all-solid-state battery according to an example embodiment of the present disclosure. In the example embodiment that follows, a detailed description of technical features repetitive to those discussed above with reference to FIGS. 9A to 9D and 10 is omitted, and a difference thereof is discussed in detail.

An all-solid-state battery according to an example embodiment of the present disclosure may include a first mono-cell 510 and a second mono-cell 520. The second mono-cell 520 may be disposed symmetrically above and below the first mono-cell 510, and the first and second mono-cells 510 and 520 may be pressurized and then combined. For example, the all-solid-state battery may be fabricated by symmetrically placing and combining the first mono-cell 510 and the second mono-cell 520 to achieve a contact between positive electrode layers 100 of the first and second mono-cells 510 and 520, and then pressing the first and second mono-cells 510 and 520.

An all-solid-state battery according to an example embodiment of the present disclosure may be fabricated by forming a negative electrode layer 200, a solid electrolyte layer 300, and a positive electrode layer 100, stacking, e.g., sequentially stacking, the negative electrode layer 200, the solid electrolyte layer 300, and the positive electrode layer 100 to allow a laminate film to receive the stack, and allowing the laminate film to undergo a warm isostatic press. The warm isostatic press of the laminate film may be performed at a temperature of about 80°C with a pressure of about 500 MPa for about 30 minutes. The warm isostatic press may include applying a substantially uniform pressure at a target temperature.

FIG. 12 is a flow chart illustrating a method of fabricating an all-solid-state battery, according to an example embodiment. In FIG. 12, the method 1200 includes operation 1210, which includes forming a negative electrode layer, a solid electrolyte layer, and a positive electrode layer. In examples, forming the negative electrode layer includes a forming a polymer gel, mixing a first solvent, a metal-carbon composite, a binder, and the polymer gel with each other to form a negative electrode slurry, and coating the negative electrode slurry on a negative electrode current collector to form a negative electrode coating layer. In an example, forming the polymer gel includes mixing a second solvent, an acrylic polymer, an amide-based compound, a base, and an oxidizing agent with each other to form a polymer mixture, inducing gelation of the polymer mixture, crushing the gelled polymer mixture, performing an ultrasonic process on the crushed polymer mixture to form fine polymer gels, and filtering the fine polymer gels.

In an additional example, inducing the gelation of the polymer mixture includes one of adding a catalyst to the polymer mixture to induce gelation, and annealing the polymer mixture without adding a catalyst to induce gelation. For example, the negative electrode layer includes a porous polymer composite derived from the polymer gel, and an amount of the porous polymer composite in the negative electrode coating layer is greater than an amount of the binder in the negative electrode coating layer.

Operation 1220 includes stacking, e.g., sequentially stacking, the negative electrode layer, the solid electrolyte layer, and the positive electrode layer to insert into a laminate film. Operation 1230 includes performing a warm isostatic press on the laminate film. For example, the warm isostatic press on the laminate film is performed at a temperature of about 80°C under a pressure of about 500 MPa.

The following describes some examples and comparative examples of the present disclosure. The following embodiments, however, are merely examples, and the present disclosure is not limited to the embodiments discussed below.

Embodiment 1

Preparation of Polymer Gel:

An acrylic polymer, an amide-based compound, a base, and an oxidizing agent were mixed and dissolved in a first solvent. N,N'-methylenebisacrylamide was prepared as the amide-based compound, and sodium hydroxide (NaOH) was prepared as the base. Ammonium persulfate was prepared as the oxidizing agent, and water was prepared as the first solvent. The first solvent, the acrylic polymer, the amide-based compound, the base, and the oxidizing agent were mixed in a weight ratio of 91.41 : 4.57 : 0.91 : 1.83 : 0.37. Subsequently, 0.1 g of tetramethylethylenediamine was added as a catalyst to the mixture to preparing a polymer mixture. The polymer mixture was prepared in which the first solvent, the acrylic polymer, the amide-based compound, the base, the oxidizing agent, and the catalyst were mixed in a weight ratio of 91.41 : 4.57 : 0.91 : 1.83 : 0.37 : 0.91.

The polymer mixture was dried at 80°C for 2 hours in air to induce gelation. The gelled polymer mixture was washed with water for 3 days. After washing, the gelled polymer mixture was crushed using a homogenizer at 10,000 rpm for 2 minutes. An ultrasonic wave at power of 25 W was applied for 1 minute to the crushed polymer mixture to produce fine polymer gels. The fine polymer gels were filtered through a syringe filter of 5 μm in size. Through the above process, a polymer gel was prepared.

Manufacture of Negative Electrode Layer:

A stainless steel (SUS) foil of 10 μm in thickness was prepared as a negative electrode current collector. In addition, carbon black (CB) having a primary particle size of 30 nm and silver (Ag) particles having an average particle diameter ($D_{50}$) of about 60 nm were prepared as a negative electrode active material. A mixed powder was prepared by blending carbon black (CB) and silver (Ag) particles in a weight of 3: 1, and then the mixed powder, a styrene-butadiene rubber (SBR) binder, and a carboxymethyl cellulose (CMC) binder were mixed in a weight ratio of 91.74 : 2.75 : 5.51 with distilled water as a solvent, thereby preparing a mixed solution. The polymer gel was added in an amount of 15 wt% to the mixed solution. Subsequently, a slurry was prepared by stirring the mixed solution while gradually adding distilled water. A bar coater was utilized to coat the prepared slurry on a stainless steel (SUS) current collector, and the coated slurry was dried at 80°C for 10 minutes in air. The obtained stack was vacuum-dried at 40°C for 10 hours. Through the above process, a negative electrode layer was manufactured. A first negative electrode active material layer was formed as a negative electrode coating layer through the above process, and the negative electrode coating layer included a porous polymer composite. Additionally, through the above process, the porous polymer composite was present in an amount of 15 wt% in the negative electrode coating layer. The first negative electrode active material layer included in the negative electrode layer was approximately 7 μm. An area of the first negative electrode active material layer was the same as that of the negative electrode current collector.

Manufacture of Positive Electrode Layer:

$LiNi_{0.8}Co_{0.15}Mn_{0.05}O_2$ (NCM) coated with $Li_2O$-$ZrO_2$ (LZO) was prepared as a positive electrode active material. The positive electrode active material coated with LZO was prepared according to a method disclosed in Korean Patent Publication No. 10-2016-0064942, the disclosure of which is hereby incorporated by reference in its entirety.

An argyrodite-type crystal, $Li_6PS_5Cl$ ($D_{50}$=0.5 μm, crystalline), was prepared as a solid electrolyte. A polyvinylidenefluoride (PVDF) binder was prepared. A carbon nano-tube (CTN) was prepared as a conductive material. The positive electrode active material, the solid electrolyte, the conductive material, and the binder were mixed in a weight ratio of 85.5 : 13.5 : 1 : 0.5 with an octyl acetate solvent to prepare a slurry in the form of a sheet, and then the mixture was vacuum-dried at 40°C for 8 hours to produce a positive electrode sheet. The produced positive electrode sheet was disposed on one side of a positive electrode current collector formed of an aluminum foil coated with carbon on one side thereof. A total thickness of a positive electrode layer was about 120 μm. A thickness of a positive electrode active material layer was about 107 μm, and a thickness of the aluminum foil coated with carbon (1 μm in thickness) was about 13 μm. An area of the positive electrode material layer was the same as that of the positive electrode current collector.

Preparation of Solid Electrolyte Layer, Dry Method:

98 parts by weight of an argyrodite-type crystal $Li_6PS_5Cl$ sulfide-based solid electrolyte ($D_{50}$=3 μm, crystalline) and 5 parts by weigh of butyl acrylate as an acrylate-based binder were added to and mixed with octyl acetate as a solvent, thereby preparing a mixture. The mixture was coated on a polyethylene terephthalate (PET) substrate and dried at 80°C to prepare a solid electrolyte layer.

Through the above process, there was prepared the solid electrolyte layer having substantially the same as that of the negative electrode layer. An elastic modulus of the sulfide-based solid electrolyte was ≥ 15 GPa to ≤ 30 GPa.

Fabrication of All-Solid-State Battery:

The negative electrode layer, the solid electrolyte layer, and the positive electrode layer were sequentially stacked and inserted into a laminate film, and a warm isostatic press (WIP) was executed at 80°C under 500 MPa for 30 minutes to fabricate an all-solid-state battery.

Embodiment 2

An all-solid-state battery was fabricated in the same method as in Embodiment 1, with a difference that, when the negative electrode layer was prepared, the polymer gel was added in an amount of 20 wt% to allow the porous polymer composite to have an amount of 20 wt% in the negative electrode coating layer.

Embodiment 3

An all-solid-state battery was fabricated in the same method as in Embodiment 1, with a difference that, when the negative electrode layer was prepared, the polymer gel was added in an amount of 10 wt% to allow the porous polymer composite to have an amount of 10 wt% in the negative electrode coating layer.

Embodiment 4

An all-solid-state battery was fabricated in the same method as in Embodiment 1, with a difference that, when the negative electrode layer was prepared, the polymer gel was added in an amount of 5 wt% to allow the porous polymer composite to have an amount of 5 wt% in the negative electrode coating layer.

Comparative 1

An all-solid-state battery was fabricated in the same method as in Embodiment 1, with a difference that the porous polymer composite was not included in the negative electrode layer.

Evaluation 1: Lifespan of All-Solid-State Battery

A lifespan of each of the all-solid-state batteries including the porous polymer composites according to the examples and the comparative example was evaluated. The evaluation of lifespan was executed by placing the all-solid-state battery in a constant-temperature bath at 45°C under about 0.7 MPa. The all-solid-state battery was charged at a constant current of 0.33 C until a battery voltage reached 4.25 V, and then charged at a constant voltage of 4.25 V until a current reached 0.05 C. Then, the all-solid-state battery was discharged at a constant current of 0.33 C until a battery voltage reached 2.5 V (first cycle). The cycle was repeated a total of 50 times to evaluate a capacity retention rate based on the number of cycles.

Capacity retention rate (%) = (discharge capacity at $50^{th}$ cycle / discharge capacity at $1^{st}$ cycle) $\times$ 100

Evaluation 2: Thickness Expansion Rate during Charge

A battery expansion rate of each of the all-solid-state batteries including the porous polymer composites according to the examples and the comparative example was evaluated. The evaluation of expansion rate was executed by placing the all-solid-state battery in a constant-temperature bath at 45°C under about 0.7 MPa. After a battery thickness was measured before charge, the all-solid-state battery was charged at a constant current of 0.1 C until a battery voltage reached 4.25 V, then charged at a constant voltage of 4.25 V until a current reached 0.05 C, followed by measuring the battery thickness.

Thickness expansion rate (%) = {(battery thickness after charge - battery thickness before charge) / (battery thickness before charge)} $\times$ 100

Table 1:

| | Lifespan analysis | Thickness expansion rate |
|---|---|---|
| Embodiment 1 | 95.3% | 28% |
| Embodiment 2 | 95.2% | 29% |
| Embodiment 3 | 94.6% | 35% |
| Embodiment 4 | 93.2% | 39% |

(continued)

| | Lifespan analysis | Thickness expansion rate |
|---|---|---|
| Comparative 1 | 92% | 43% |

Referring to Table 1, it may be observed that, compared to the all-solid-state battery of Comparative 1, the all-solid-state battery of Embodiments 1 to 4 having a negative electrode layer including a porous polymer composite exhibits desired or improved lifespan characteristics and improved reduction or suppression of thickness expansion. In contrast, it may be ascertained that the all-solid-state battery of Comparative 1 including no porous polymer composite deteriorates in lifespan characteristics and thickness expansion.

In an all-solid-state battery according to an example embodiment of the present disclosure, a porous polymer composite having a pore may be included to reduce or prevent an excessive volume expansion due to lithium when the all-solid-state battery is charged and discharged. Lithium may be formed in the pore of the porous polymer composite when the all-solid-state battery is charged and discharged, and a uniform electrodeposition of lithium may thus be induced. For example, in the all-solid-state battery of the present disclosure, since the porous polymer composite is included in a negative electrode coating layer, a negative electrode layer of the all-solid-state battery may be reduced or prevented from being cracked during charge and discharge. Therefore, the all-solid-state battery may improve in stability.

An all-solid-state battery according to an example embodiment of the present disclosure may include a porous polymer composite having a pore, and thus it may be possible to reduce or prevent an excessive volume expansion due to lithium when the all-solid-state battery is charged and discharged. For example, according to the present disclosure, as a volume expansion of the all-solid-state battery is reduced or suppressed during charge and discharge, the all-solid-state battery may be fabricated under a desired pressurized environment. In the manufacture and assembly of electrode plates (positive and negative electrodes), a proper and uniform pressure may be applied to reduce or prevent separation and detachment of components caused by excessive pressure. In conclusion, the all-solid-state battery may have desired or improved battery lifespan.

Although some example embodiments of the present disclosure have been discussed with reference to accompanying figures, it is understood that various changes in form and details may be made therein without departing from the spirit and scope of the present disclosure. It therefore is understood that the example embodiments described above are just illustrative but not limitative in all aspects.

## Claims

**1.** An all-solid-state battery (10), comprising:

a positive electrode layer (100);
a negative electrode layer (200), wherein the negative electrode layer (200) comprises a negative electrode current collector (210) and a negative electrode coating layer (220) on the negative electrode current collector (210); and
a solid electrolyte layer (300) between the positive electrode layer (100) and the negative electrode layer (200),
wherein the negative electrode layer (200) comprises lithiophilic metal, carbon, an additive, and a porous polymer composite (PPC),
wherein the porous polymer composite (PPC) has a particulate shape,
wherein the additive comprises a binder (BND), and
wherein an amount of the porous polymer composite (PPC) in the negative electrode coating layer (220) is greater than an amount of the additive in the negative electrode coating layer (220).

**2.** The all-solid-state battery (10) of claim 1, wherein the amount of the porous polymer composite (PPC) in the negative electrode coating layer (220) is in a range of ≥ 5 wt% to ≤ 20 wt%.

**3.** The all-solid-state battery (10) of claim 1 or 2, wherein the amount of the additive in the negative electrode coating layer (220) is in a range of ≥ 2 wt% to ≤ 10 wt%.

**4.** The all-solid-state battery (10) according to any one of claims 1 to 3, wherein the additive comprises at least one of a filler, a coating agent, a dispersant, and an ion conductivity agent.

**5.** The all-solid-state battery (10) according to any one of claims 1 to 5, wherein an average particle diameter of the porous polymer composite (PPC) is in a range of ≥ 500 nm to ≤ 1 μm.

**6.** The all-solid-state battery (10) according to any one of claims 1 to 5, wherein the porous polymer composite (PPC) comprises a cross-linked polymer.

**7.** The all-solid-state battery (10) according to any one of claims 1 to 6, wherein the porous polymer composite (PPC) comprises a cross-linked polymer, and wherein:

the cross-linked polymer comprises a repeating unit derived from a cross-linker having two or more double-bond functional groups, and
the cross-linker comprises at least one of pentaerythritol tetraacrylate, pentaerythritol tetramethacrylate, trimethylolpropane triacrylate, trimethylolpropane trimethacrylate, propoxylated (3) trimethylolpropane triacrylate (PO(3)TMPTA), propoxylated (6) trimethylolpropane triacrylate (PO(6)TMPTA), ethoxylated trimethylolpropane triacrylate, di(trimethylolpropane) tetraacrylate, pentaerythritol triacrylate (PETA), propoxylated glyceryl triacrylate, tris(2-hydroxyethyl) isocyanurate triacrylate (THEICTA), and dipentaerythritol pentaacrylate (DPEPA).

**8.** The all-solid-state battery (10) according to any one of claims 1 to 7, wherein the porous polymer composite (PPC) further comprises a linear polymer comprising at least one of polyethylene (PE), styrene-butadiene rubber (SBR), nylon, carboxymethyl cellulose (CMC), polyethylene oxide (PEO), polyvinylidenefluoride (PVDF), vinylidenefluoride-hexafluoropropylene (PVDF-HFP), polystyrene-b-poly(ethylene oxide) block copolymer (PS-PEO), poly(styrene-butadiene), poly(styrene-isoprene-styrene), poly(styrene-b-divinylbenzene) block copolymer, poly(styrene-ethylene oxide-styrene) block copolymer, polystyrene sulfonate (PSS), polyvinyl fluoride (PVF), polyethylene glycol (PEG), polyacrylonitrile (PAN), polytetrafluoroethylene (PTFE), polyethylene dioxythiophene (PEDOT), polypyrrole (PPY), polyaniline, and polyacetylene.

**9.** The all-solid-state battery (10) according to any one of claims 1 to 8, wherein the porous polymer composite (PPC) comprises a cross-linked polymer having a pore.

**10.** The all-solid-state battery (10) according to any one of claims 1 to 9, wherein:

the porous polymer composite (PPC) comprises a plurality of linear polymers, and
the plurality of linear polymers have a network polymer.

**11.** A negative electrode for an all-solid-state battery (10), the negative electrode comprising:

a negative electrode current collector (210); and
a negative electrode coating layer (220) on the negative electrode current collector (210),
wherein the negative electrode coating layer (220) comprises a metal-carbon composite (CPL), a binder (BND), and a porous polymer composite (PPC),
wherein the porous polymer composite (PPC) has a particulate shape, and
wherein an average particle diameter of the porous polymer composite (PPC) is less than an average particle diameter of the metal-carbon composite (CPL).

**12.** The negative electrode of claim 11, wherein the average particle diameter of the porous polymer composite (PPC) is in a range of ≥ 500 nm to ≤ 1 μm.

**13.** The negative electrode of claim 11 or 12, wherein the average particle diameter of the porous polymer composite (PPC) is in a range of ≥ 1 μm to ≤ 25 μm.

**14.** The negative electrode according to any one of claims 11 to 13, wherein an amount of the metal-carbon composite (CPL) in the negative electrode coating layer (220) is greater than an amount of the porous polymer composite (PPC) in the negative electrode coating layer (220).

**15.** The negative electrode according to any one of claims 11 to 14, wherein an amount of the metal-carbon composite (CPL) in the negative electrode coating layer (220) is greater than an amount of the porous polymer composite (PPC) in the negative electrode coating layer (220), and wherein the amount of the metal-carbon composite (CPL) in the negative electrode coating layer (220) is in a range of ≥ 77 wt% to ≤ 92 wt%.

FIG. 1

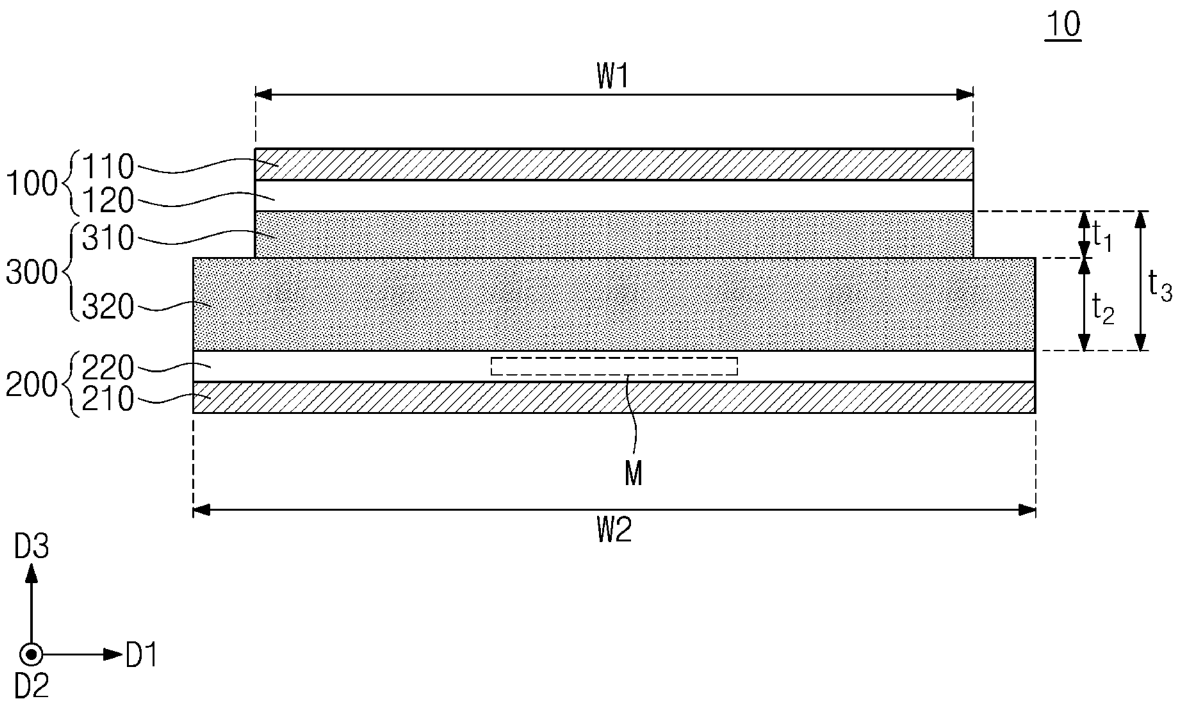

FIG. 2

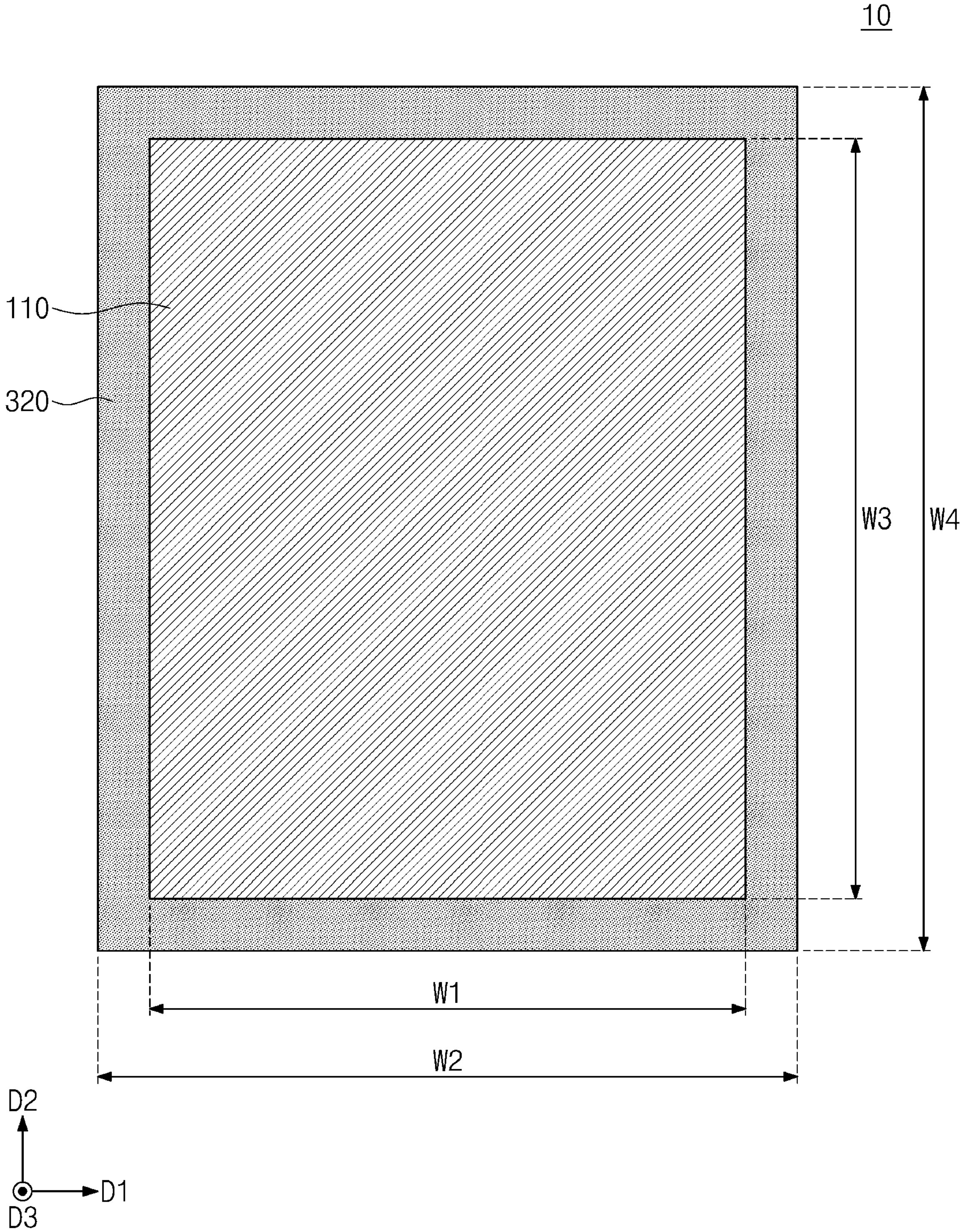

FIG. 3

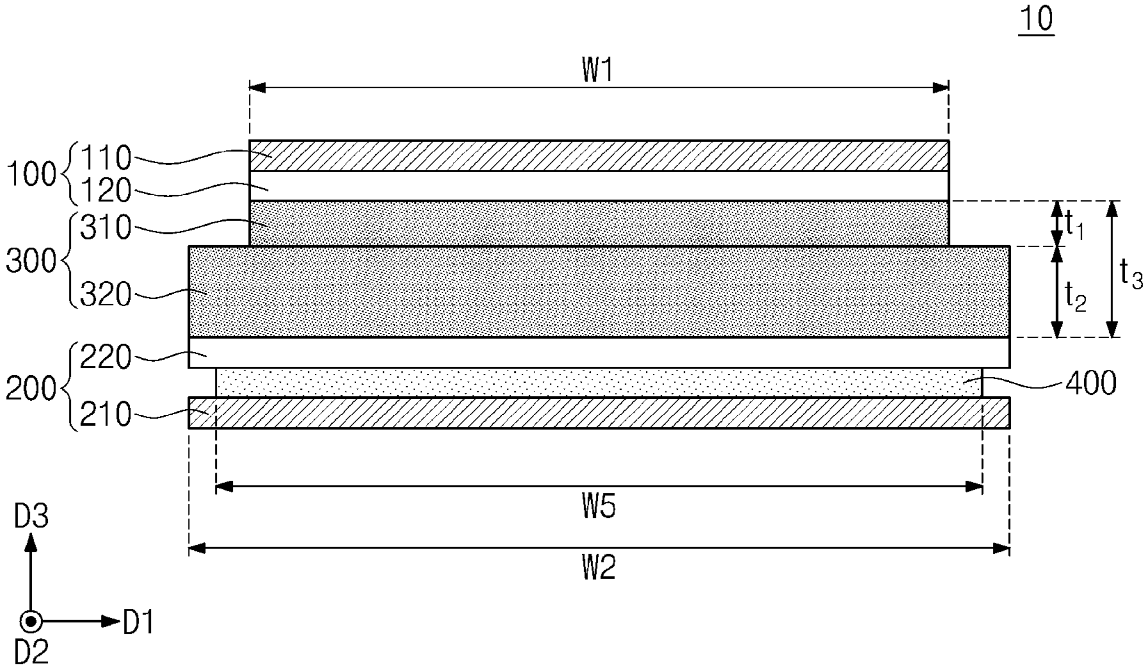
10
W1
100
110
120
300
310
320
200
220
210
400
t1
t2
t3
W5
W2
D3
D1
D2

FIG. 4

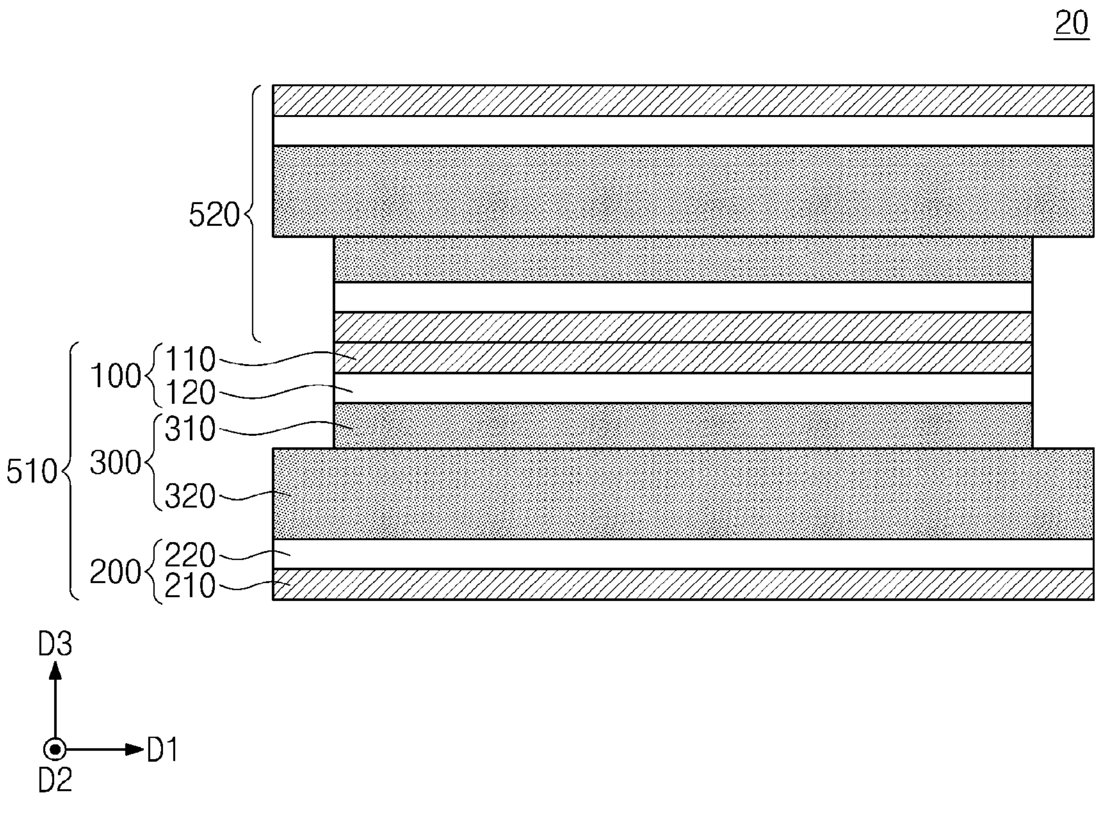
20
520
510
100
110
120
300
310
320
200
220
210
D3
D1
D2

FIG. 5

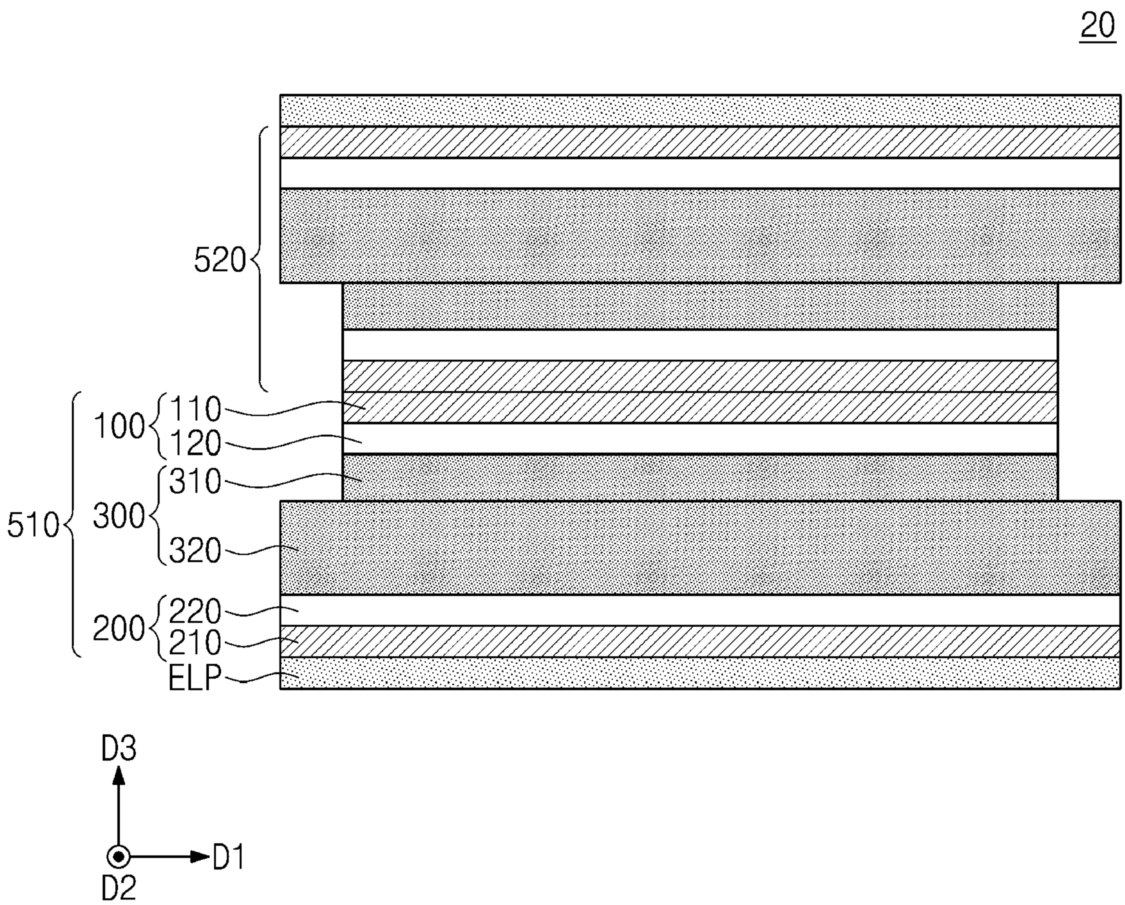

FIG. 6

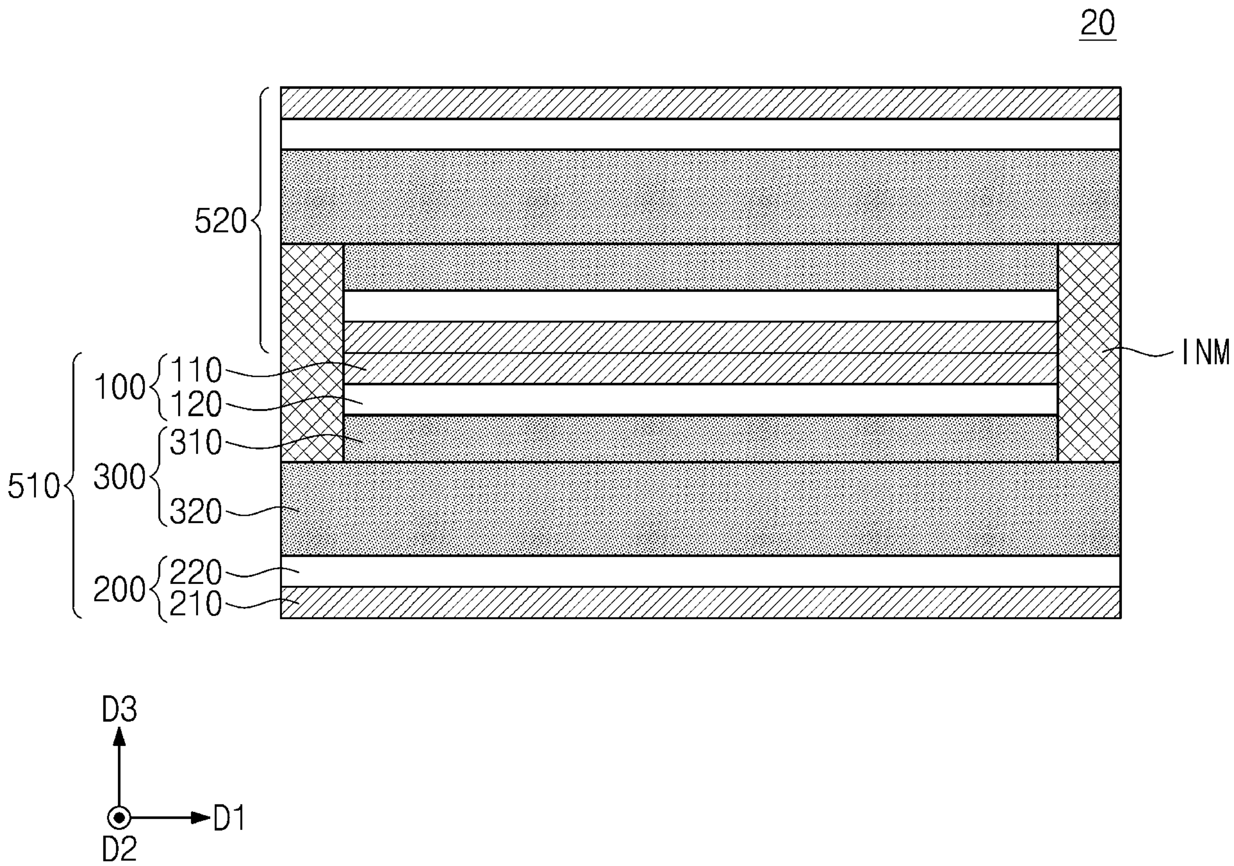

FIG. 7

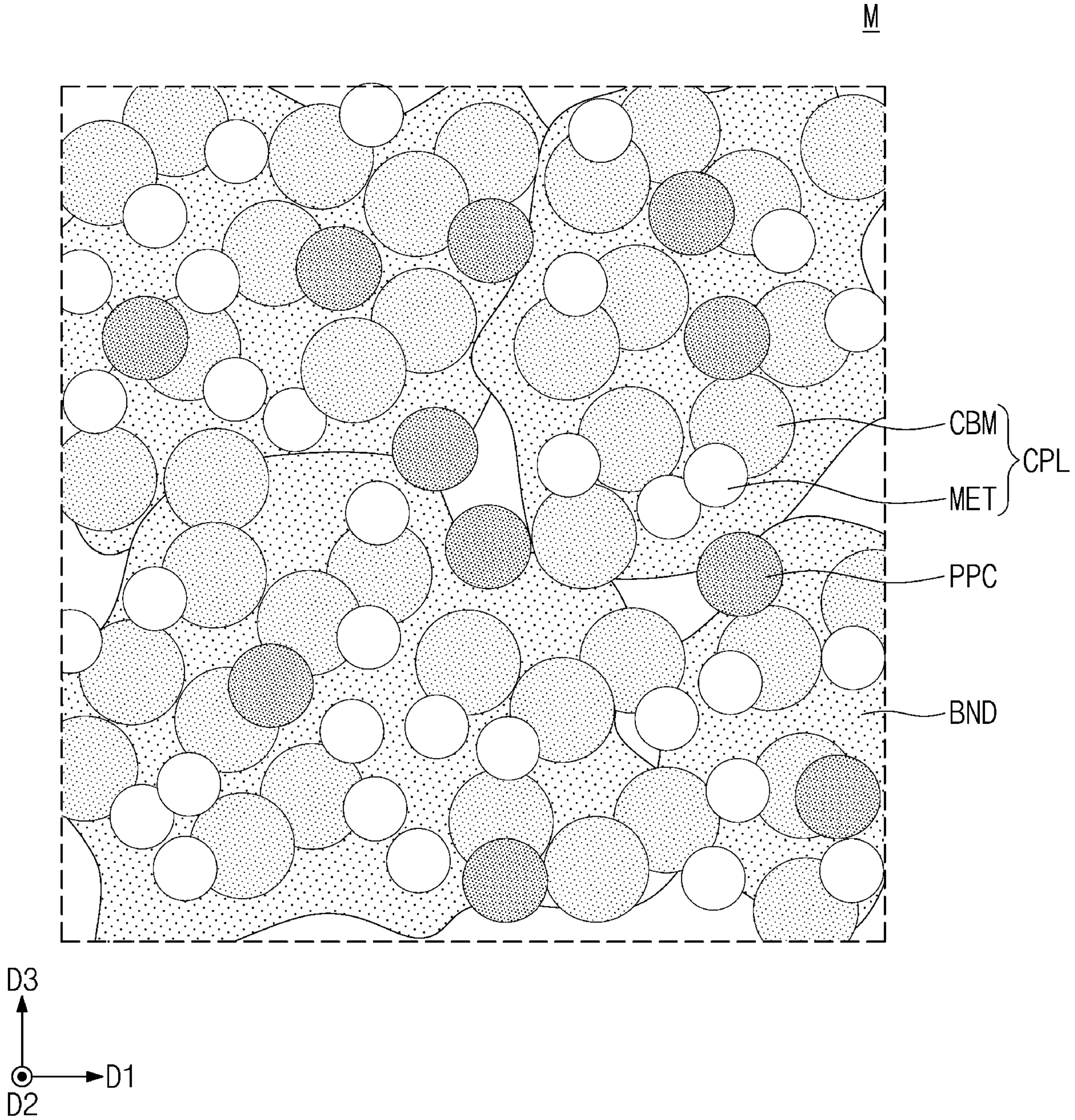

FIG. 8A

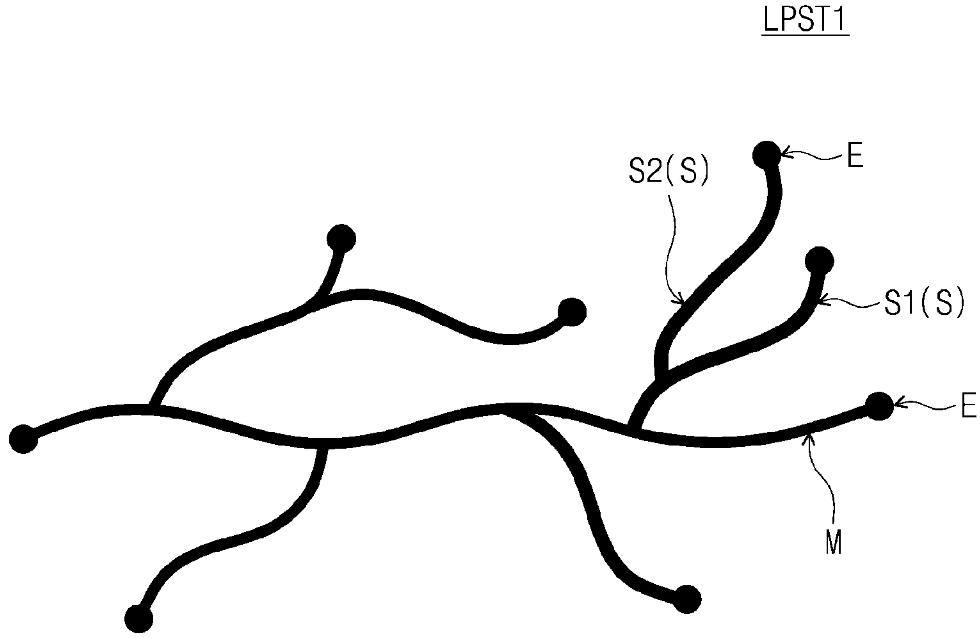


FIG. 8B

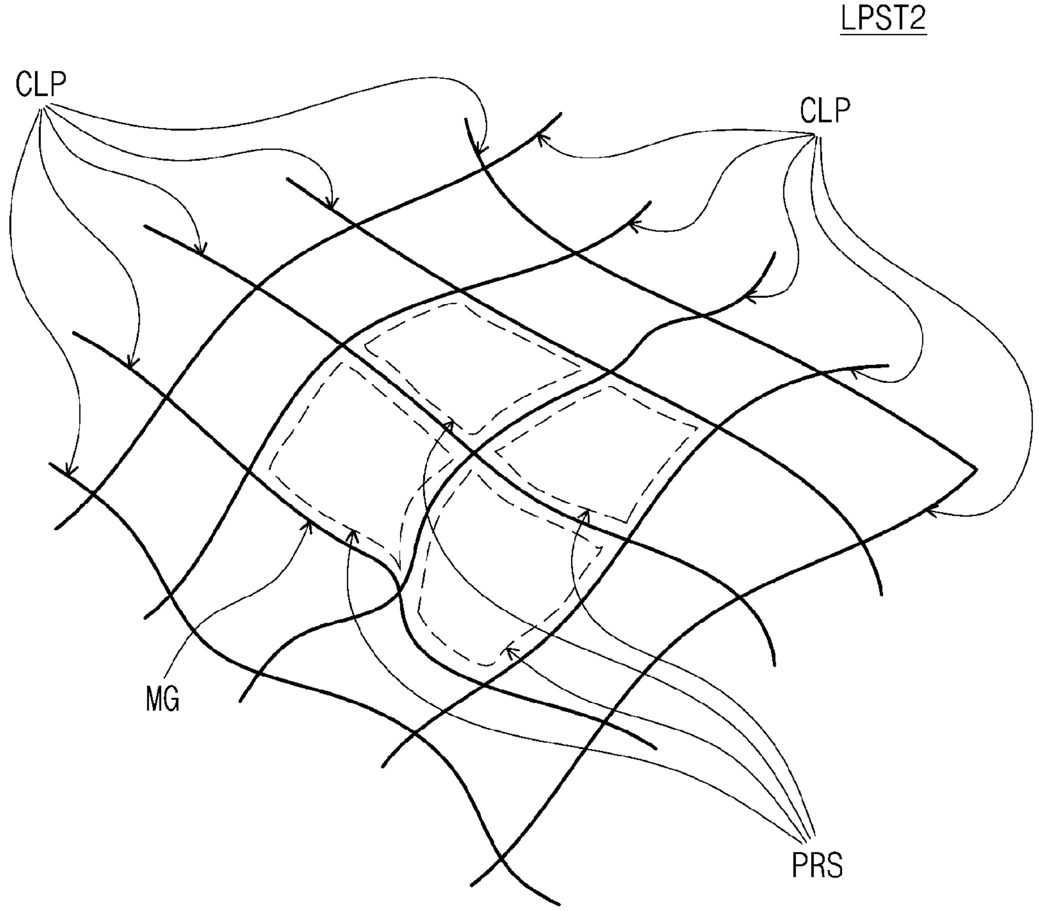

FIG. 9A

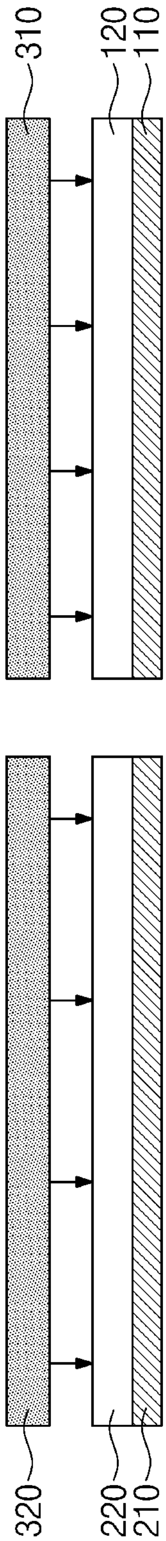


FIG. 9B

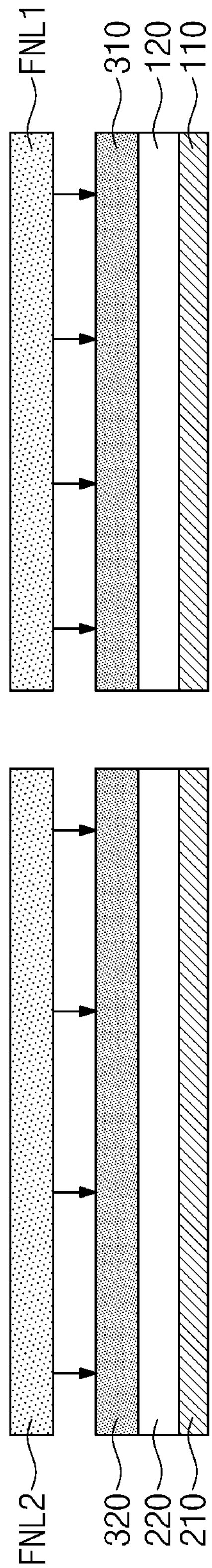

FIG. 9C

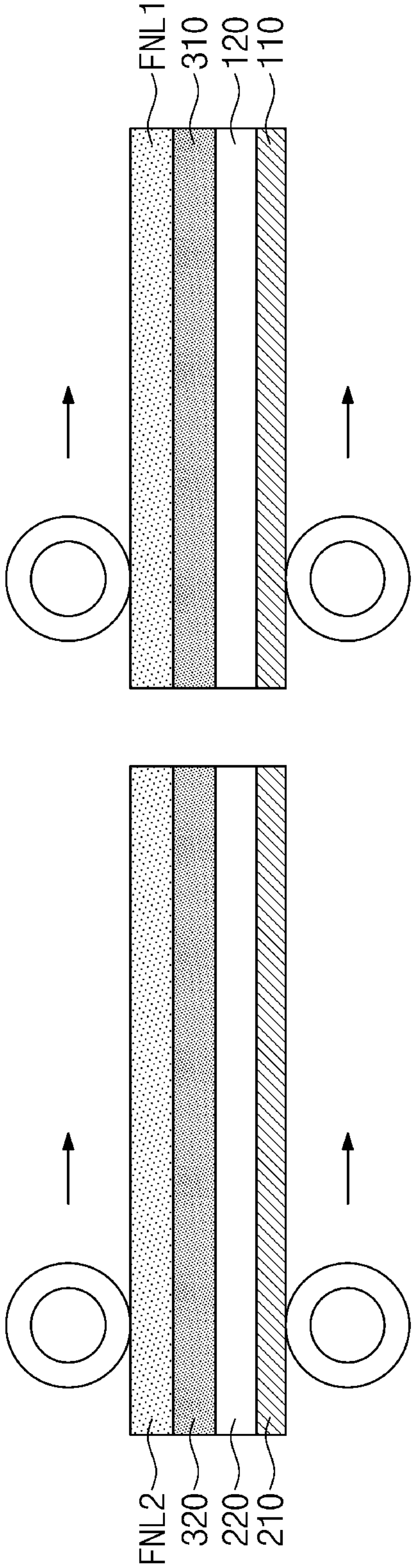
FNL1
310
120
110
FNL2
320
220
210

FIG. 9D

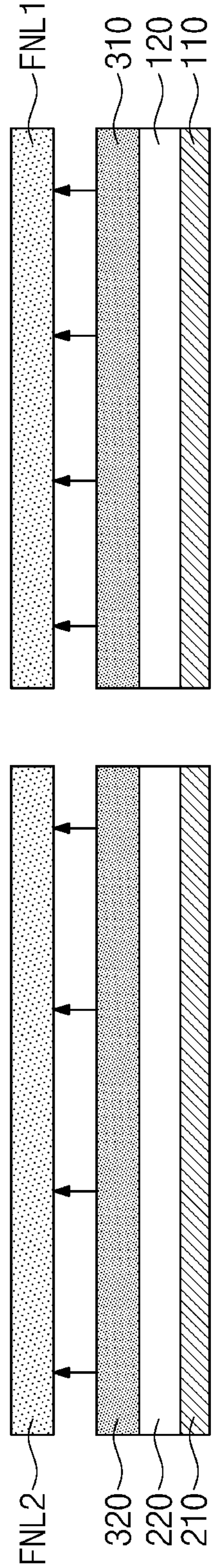
FNL1
310
120
110
FNL2
320
220
210

FIG. 10

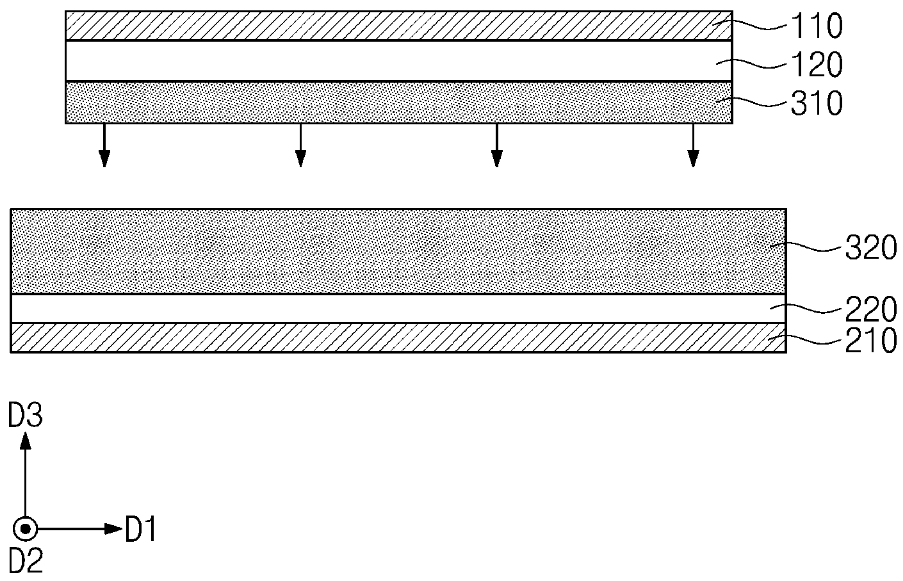

FIG. 11

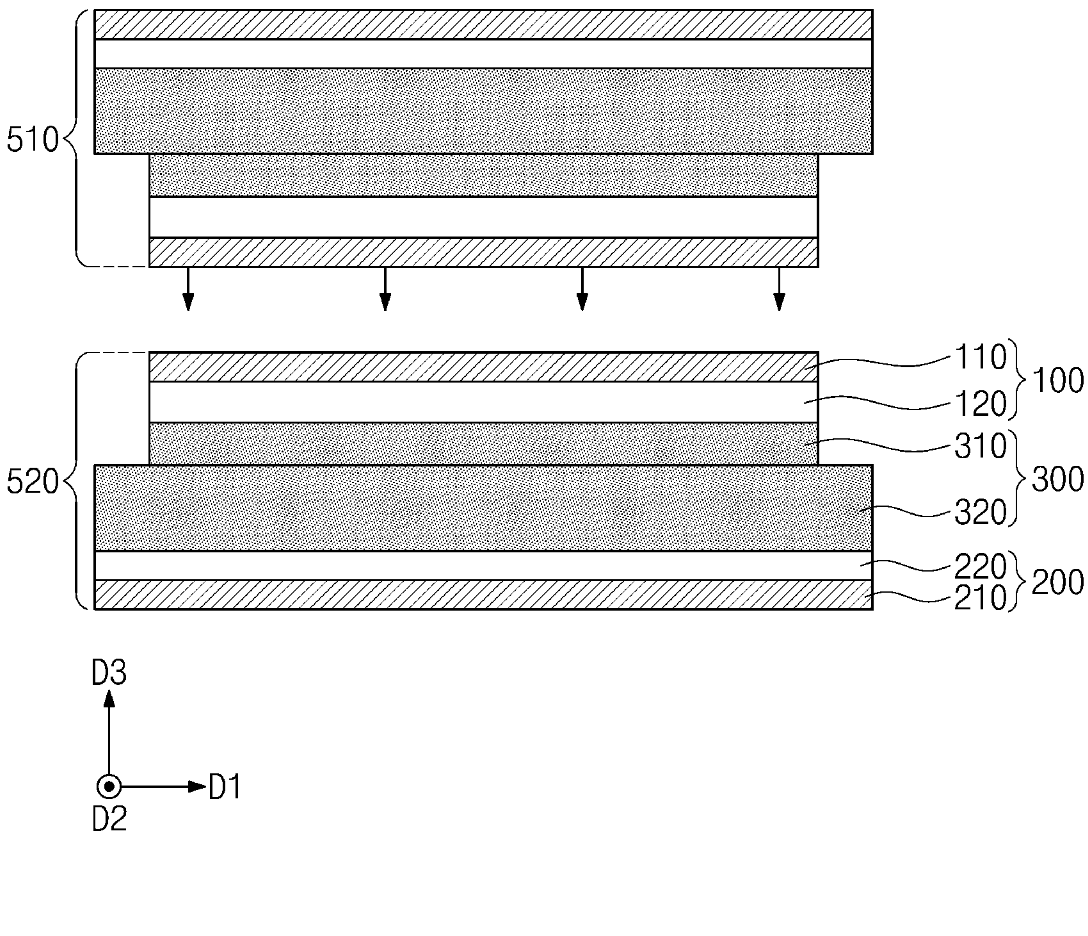

FIG. 12

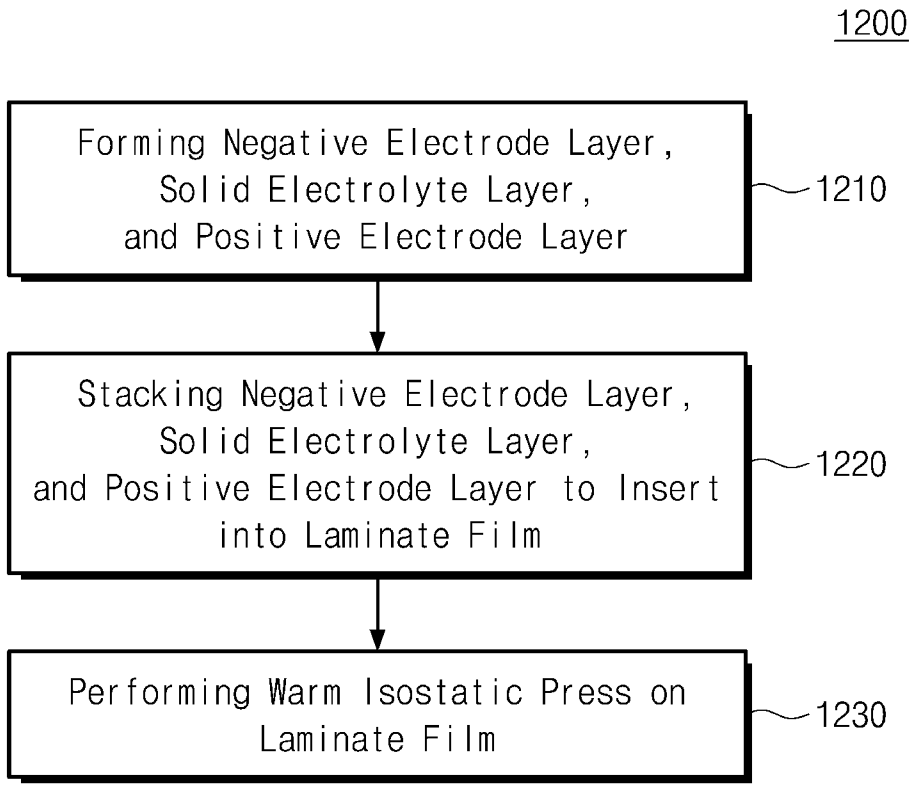
1200
Forming Negative Electrode Layer, Solid Electrolyte Layer, and Positive Electrode Layer
1210
Stacking Negative Electrode Layer, Solid Electrolyte Layer, and Positive Electrode Layer to Insert into Laminate Film
1220
Performing Warm Isostatic Press on Laminate Film
1230

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020240120639
- KR 1020160064942